(19) Europäisches Patentamt
European Patent Office
Office européen des brevets

(11) **EP 0 739 457 B1**

(12) **EUROPÄISCHE PATENTSCHRIFT**

(45) Veröffentlichungstag und Bekanntmachung des Hinweises auf die Patenterteilung:
**18.03.1998 Patentblatt 1998/12**

(21) Anmeldenummer: **95903893.6**

(22) Anmeldetag: **10.01.1995**

(51) Int Cl.⁶: **F16C 39/06**

(86) Internationale Anmeldenummer:
**PCT/IB95/00019**

(87) Internationale Veröffentlichungsnummer:
**WO 95/18925 (13.07.1995 Gazette 1995/30)**

(54) **VERFAHREN UND STEUERGERÄT ZUR STEUERUNG EINER ELEKTRISCHEN DREHFELDMASCHINE MIT SPEZIALWICKLUNG ZUR KOMBINIERTEN ERZEUGUNG EINES DREHMOMENTS UND EINER QUERKRAFT IN DERSELBEN**

PROCESS AND DEVICE FOR CONTROLLING AN ELECTRIC INDUCTION MACHINE WITH A SPECIAL WINDING FOR SIMULTANEOUSLY GENERATING A TORQUE AND A TRANSVERSE FORCE THEREIN

PROCEDE ET APPAREIL DE COMMANDE D'UN GENERATEUR ELECTRIQUE A INDUCTION A ENROULEMENT SPECIAL PERMETTANT DE GENERER EN MEME TEMPS UN COUPLE ET UNE FORCE TRANSVERSALE

(84) Benannte Vertragsstaaten:
**CH DE FR GB IT LI**

(30) Priorität: **10.01.1994 CH 56/94**

(43) Veröffentlichungstag der Anmeldung:
**30.10.1996 Patentblatt 1996/44**

(73) Patentinhaber:
• **Sulzer Electronics AG**
**8409 Winterthur (CH)**
• **LUST ANTRIEBSTECHNIK GmbH**
**D-35631 Lahnau (DE)**

(72) Erfinder: **SCHÖB, Reto**
**CH-8604 Volketswil (CH)**

(74) Vertreter: **Heubeck, Bernhard**
**Sulzer Management AG,**
**KS Patente/0007,**
**Zürcherstrasse 12**
**8401 Winterthur (CH)**

(56) Entgegenhaltungen:
**DE-A- 2 353 342**        **DE-A- 2 656 469**
**DE-U- 9 112 183**       **US-A- 4 841 204**

## Beschreibung

Die Erfindung bezieht sich auf das Gebiet der Antriebs- und Regelungstechnik.

Sie geht von einem Verfahren zur Steuerung einer Drehfeldmaschine mit Spezialwicklung zur kombinierten Erzeugung eines Drehmoments und einer auf den Rotor wirkenden Querkraft nach dem Oberbegriff des ersten Anspruchs aus. Im weiteren betrifft sie ein Steuergerät für eine Drehfeldmaschine mit Spezialwicklung.

Die Voraussetzungen, unter welchen in elektrischen Maschinen einseitige magnetische Züge auftreten, sind schon zu Beginn dieses Jahrhunderts untersucht worden. Sie werden zum Beispiel im dreibändigen Grundlagenwerk von H. Sequenz "Die Wicklungen elektrischer Maschinen", Springer Verlag Wien, 1950 wie auch im Lehrbuch von Th. Bödefeld und H. Sequenz, sechste Auflage, Springer-Verlag Wien, 1962 beschrieben. Nach Sequenz treten einseitige magnetische Zugkräfte nur dann auf, wenn das resultierende Durchflutungsvieleck zentrisch unsymmetrisch ist und sich erst nach dem Durchlaufen des ganzen Ankerumfangs schliesst. Die über den gesamten Umfang verteilten radialen Maxwellkräfte heben sich dann in ihrer vektoriellen Summe nicht auf, so dass eine Zugkraft resultiert. Im Grundlagenwerk von H. Sequenz sind zwei Fälle beschrieben, welche eine zentrische Unsymmetrie des Durchflutungsvielecks bewirken:

- wenn die Ständer- oder Läuferdrehfelder Oberwellen enthalten, deren Polpaardifferenzen untereinander oder zur Grundwelle gleich eins sind;
- wenn in polumschaltbaren Drehfeldmachinen zwei Ständer-Wicklungen betrieben werden, deren Polpaardifferenz gleich eins ist.

Lange Zeit wurden einseitige magnetische Züge von Elektromaschinenbauern ausschliesslich als unerwünschte Störkräfte betrachtet und durch geeignete Massnahmen bekämpft. Erstmals hat P. K. Hermann versucht, die in einer elektrischen Maschine wirkenden einseitigen magnetischen Züge zu nutzen. In den deutschen Patentanmeldungen:

**DE-OS 24 57 084.1-32**
**DE-OS 24 06 790.1-32**

beschreibt er ein radiales aktives magnetisches Lager, das auf einseitigen magnetischen Zugkräften basiert. Er schlägt ein Steuerverfahren vor, bei dem zwei Ständer-Wicklungen einer Drehfeldmaschine mit einer Polpaarzahldifferenz von eins mit Drehströmen derselben Frequenz gespeist werden, wobei der Speisestrom der einen Wicklung, die im folgenden Steuerwicklung genannt wird, aus dem Speisestrom der anderen Wicklung, im folgenden Antriebswicklung genannt, durch Amplitudenmodulation abgeleitet wird. Die Phasenlage zwischen den Strömen der beiden Wicklungen, im folgenden Steuer- und Antriebsstrom genannt, wird mittels einer Phasenjustiereinrichtung abgestimmt.

Ein Nachteil dieser Steuerung liegt darin, dass die Richtung und der Betrag der über den Steuerstrom gesteuerten magnetischen Zugkraft, im folgenden Maxwell-Querkraft genannt, vom Lastzustand und von der Drehzahl der Maschine abhängt. Im weiteren bleiben bei der beschriebenen Steuerung die, bei der Kombination von zwei Wicklungssystemen mit einer Polpaarzahldifferenz von eins ebenfalls auftretenden Lorentz-Querkräfte, unberücksichtigt. Diese können sich daher als Störkräfte bemerkbar machen.

Ein Vorschlag, diese bei der Kombination von zwei Wicklungssystemen mit einer Polpaarzahldifferenz von eins auftretenden Lorentz-Querkräfte zu nutzen, stammt von J. Bichsel. In seiner Dissertation "Beiträge zum lagerlosen Elektromotor", ETH Zürich, 1990 und in den schweizerischen Patentgesuchen:

**Nr. 04 049/90-2**
**Nr. 04 050/90-2**
**Nr. 04 051/90-0**
**Nr. 04 052/90-2**

beschreibt er Magnetlageranordnungen, die auf der Wirkung von Lorentz-Querkräften basieren. Er beschreibt auch ein auf dem Prinzip der Flussorientierung basierendes Steuerverfahren für eine Synchronmaschine, dass es erlaubt, unabhängig vom Betriebspunkt der Maschine eine Lorentz-Querkraft in Betrag und Richtung einzustellen.

Ein Nachteil des Steuerverfahrens besteht darin, dass es Maxwell-Querkräfte unberücksichtigt lässt. Zudem lässt sich das Verfahren nicht auf die Induktionsmaschine übertragen, da dort keine nutzbare Lorentz-Querkraft erzeugt werden kann.

Zur Realisierung des erfindungsgemässen Steuerverfahrens ist die Kenntnis des Antriebsflussbetrags, des Antriebsflusswinkels und des drehmomentbildenden Antriebsständerstroms in der Drehfeldmaschine notwendig. Unter der Bezeichnung "Feldorientierte Regelung oder Steuerung der Synchron- und Asynchronmaschine" sind Verfahren zur Bestimmung dieser Grössen in grosser Zahl in der Literatur beschreiben. Die Grundlagen der feldorientierten Regelung gehen auf F. Blaschke zurück (Das Verfahren der Feldorientierung zur Regelung der Asynchronmaschine, Siemens Forsch.- u. Entwickl.- Berichte Nr. 1/72, Siemens AG Erlangen, 1972 und das Verfahren der Feldorientierung zur Regelung der Drehfeldmaschine, Dissertation TU Braunschweig 1974). Eine gute Übersicht über die verschiedensten Verfahren zur feldorientierten Regelung der Asynchronmaschine bietet die Dissertation von W. Zägelin ( Drehzahlregelung des Asynchronmotors unter Verwendung eines Beobachters mit geringer Parameterempfindlichkeit, Dissertation Universität Erlangen, 1984). Beispiele für feldorientierte Regelungen von Synchronmaschinen sind in Orik, B. : Regelung einer permanentmagneterregten Synchronmaschine mit einem Mikrorechner, Automatisierungstechnik at., 33. Jahrgang, Heft 3/85; in Schwarz, B. : Beiträge zu reaktionsschnellen und hochgenauen Drehstrom-Positioniersystemen, Dissertation Universität Stuttgart 1986 und in Löbe, W. : Digitale Drehzahl- und Lageregelung eines Synchron-Servoantriebs mit selbsteinstellender Zustandsregelung, etzArchiv Band 11, Heft 4/89 zu finden.

Aufgabe der vorliegenden Erfindung ist es, ein Steuerverfahren und eine Steuereinrichtung für eine Drehfeldmaschine mit einer $p_1$-polpaarigen und einer ($p_2 = P_1 \pm 1$)-polpaarigen Wicklung zur Bildung eines auf den Rotor der Maschine wirkenden Querkraftvektors anzugeben, bei welchem die o.g. Nachteile des Standes der Technik vermieden werden sollen. Insbesondere sollen vom Steuerverfahren alle in der Maschine auftretenden Querkräfte, die Maxwell-Querkraft und die Lorentz-Querkraft berücksichtigt werden. Das Steuerverfahren soll zudem für jeden Betriebszustand der Maschine die exakte Steuerung des Querkraftvektors erlauben.

Diese Aufgabe wird bei einem Steuerverfahren der eingangs genannten Art durch die kennzeichnenden Merkmale des ersten Anspruchs, bei einem Steuergerät der eingangs genannten Art, durch die Merkmale des 10. Anspruchs gelöst.

Das Verfahren basiert auf der Analyse aller in einer elektrischen Drehfeldmaschine wirkenden magnetischen Querkräfte: der Maxwell-Querkraft und der Lorentz-Querkraft.

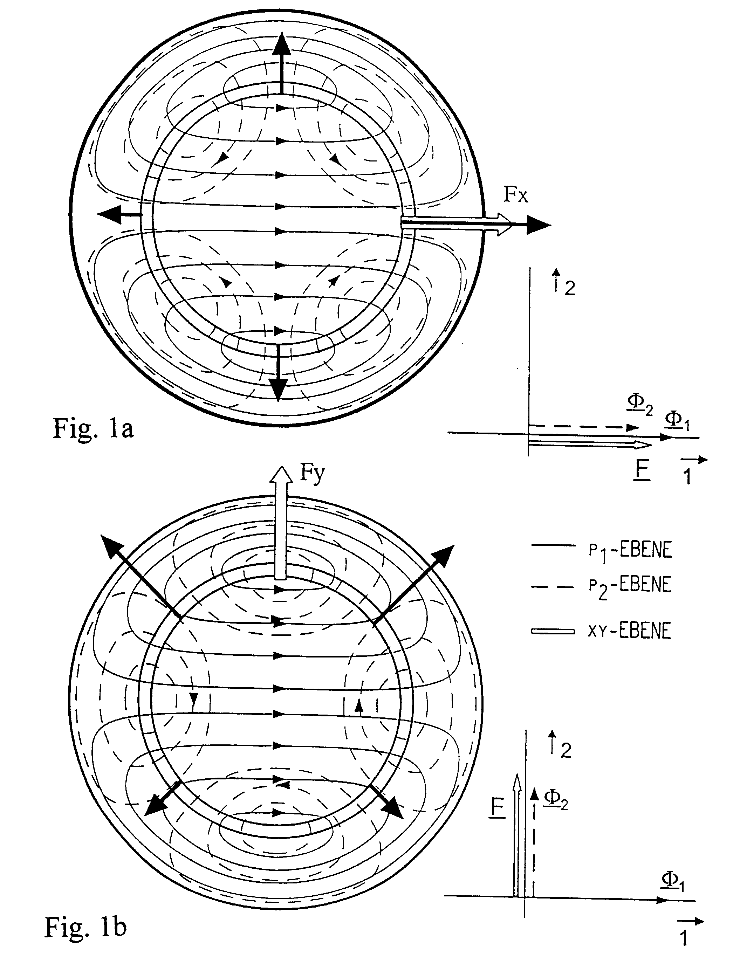

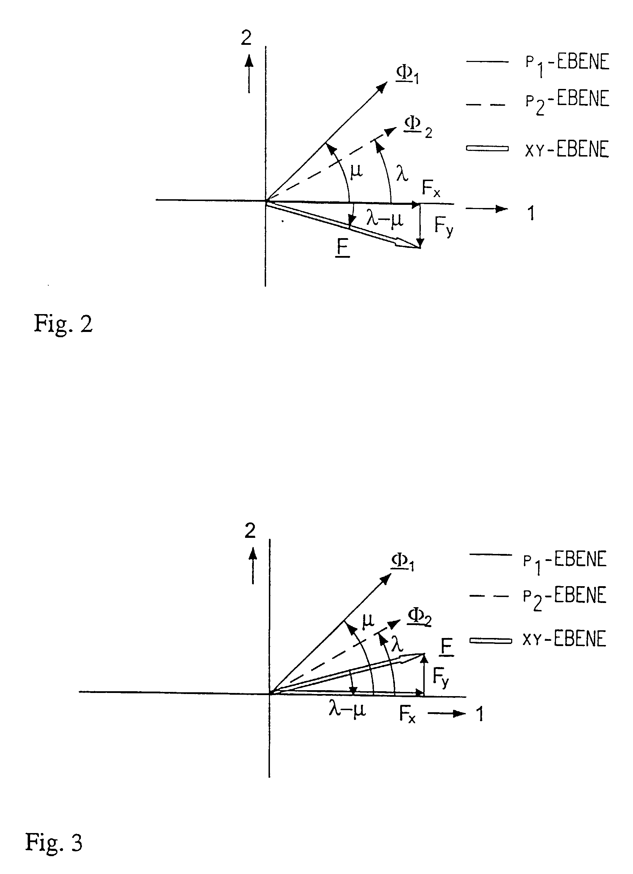

Maxwell-Kräfte sind Kräfte, die in einem magnetischen Kreis an den Grenzflächen zwischen Stoffen mit unterschiedlichen Permeabilitäten auftreten. In einer Maschine mit ferromagnetischem Rotor greifen die Maxwell-Kräfte senkrecht am Rotor an. Da sich diese bei exakt zentrischer Anordnung des Rotors und bei sinusförmiger Induktionsverteilung in ihrer Summe aufheben, werden sie normalerweise gar nicht beachtet. Erst bei einer Verlagerung des Rotors aus dem Zentrum oder bei einer unsymmetrischen Induktionsverteilung resultiert eine Maxwell-Querkraft. Eine solche Asymmetrie der Induktionsverteilung kann erreicht werden, wenn dem $p_1$-polpaarigen, sinusförmig verteilten Antriebsmagnetfeld ein ($p_2 = p_1 \pm 1$)-polpaariges ebenfalls sinusförmig verteiltes Steuermagnetfeld überlagert wird (vergl. Fig 1). Die beiden Magnetfelder lassen sich durch Flussvektoren beschreiben. $\underline{\Phi}_1$ zeigt in die Richtung der maximalen Induktion des Antriebsmagnetfelds und $\underline{\Phi}_2$ zeigt in die Richtung der maximalen Induktion des Steuermagnetfelds. Der Betrag der Maxwell-Querkraft ist proportional zum Produkt der Flussbeträge. Werden die Vektoren in ihren elektrischen Ebenen ($\underline{\Phi}_1$ im $p_1$-polpaarigen System und $\underline{\Phi}_2$ im $p_2$-polpaarigen System) betrachtet, so ist die Richtung der Maxwell-Querkraft nur von der relativen Lage der beiden Flussvektoren zu einander abhängig. Für den Fall $p_2 = p_1+1$ zeigt der Maxwell-Querkraftvektor gerade in die Richtung des Steuerflussvektors $\underline{\Phi}_2$, relativ zum Antriebsflussvektor $\underline{\Phi}_1$ (vergl. Fig 3). Für den Fall $p_2 = p_1-1$ muss der Maxwell-Querkraftvektor noch zusätzlich an der 1-Achse gespiegelt werden (vergl. Fig 2) .

Der Steuerfluss ist proportional zum Magnetisierungsstrom in der Steuerwicklung (Magnetisierungsstromanteil des Steuerstroms). Falls angenommen werden kann, dass kein $p_2$-polpaariger Rotorstrom fliesst, ist dieser praktisch identisch mit dem Steuerstrom. Somit ist die Querkraft direkt über den Steuerstromvektor $\underline{i}_{S2}^{(S,p_2)}$ einstellbar. Die Maxwell-Querkraft lässt sich also als Vektorgleichung von $\underline{i}_{S2}^{(S,p_2)}$ und $\underline{\Phi}_1$ schreiben. Im praktischen Umgang mit der Gleichung ist es einfacher, wenn an Stelle des Antriebsflussvektor $\underline{\Phi}_1$, der mit der $p_1$-polpaarigen Antriebswicklung verkettete Flussvektor $\underline{\Psi}_{1q}^{(p_1)}$ verwendet wird.

Die Maxwell-Querkraft wird also in Vektorkomponenten dargestellt durch die folgende Gleichung beschrieben.

$$F_{Mx} = +\frac{\pi p_1 p_2 L_2}{4 l r \mu_0 w_1 w_2}(i_{S2d}^{(p_2)} \cdot \Psi_{1d}^{(p_1)} + i_{S2q}^{(p_2)} \cdot \Psi_{1q}^{(p_1)})$$

$$F_{My} = \pm\frac{\pi p_1 p_2 L_2}{4 l r \mu_0 w_1 w_2}(i_{S2q}^{(p_2)} \cdot \Psi_{1d}^{(p_1)} - i_{S2d}^{(p_2)} \cdot \Psi_{1q}^{(p_1)}) \quad | p_2 = p_1 \pm 1$$

Die gewählte Vektorkomponentendarstellung lehnt sich an die bekannte und weit verbreitete Vektordarstellung der elektrischen Maschine (Zweiachsendarstellung, dq-Darstellung) an. Bei dieser Darstellungsart wird zur einfacheren Beschreibung mittels ebener Vektoren, eine m-phasige Maschine mit der Polpaarzahl p auf eine 2-phasige Ersatzmaschine mit der Polpaarzahl 1 abgebildet. Da aber zur Querkraftbildung in einer Drehfeldmaschine zwei Wicklungen mit einer Polpaardifferenz von 1 notwendig sind, und im Gegensatz zur Beschreibung der Drehmomentbildung ebenfalls die geometrischen Strom- und Flussverteilungen in der Maschine von Interesse sind, ist es für die Beschreibung der Querkraftbildung wichtig, dass die durch die Abbildung von der realen Maschine auf die Ersatzmaschine verloren gegangene Information der geometrischen Wicklungsverteilung durch Kennzeichnung der Abbildungsebene und Definition der Lage der Wicklungsachsen ersetzt wird. In den folgenden Gleichungen ist deshalb die Abbildungsebene bei allen Vektorgrössen angegeben (hochgestellt in Klammern). Die geometrische Lage der Wicklungen ist so definiert, dass ihre d-Achsen mit der geometrischen x-Achse zusammenfallen. Die Kennzeichnung der Phasenzahlen der Wicklungen ist nicht notwendig, da diese keinen Einfluss auf die geometrische Strom- und Flussverteilung in der Maschine haben.

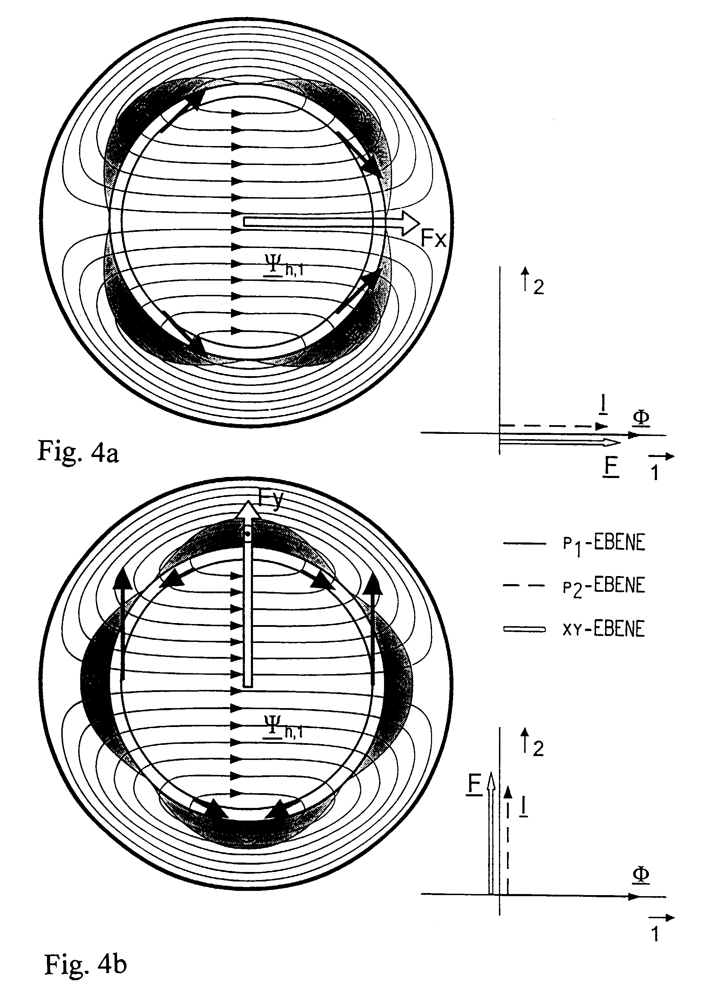

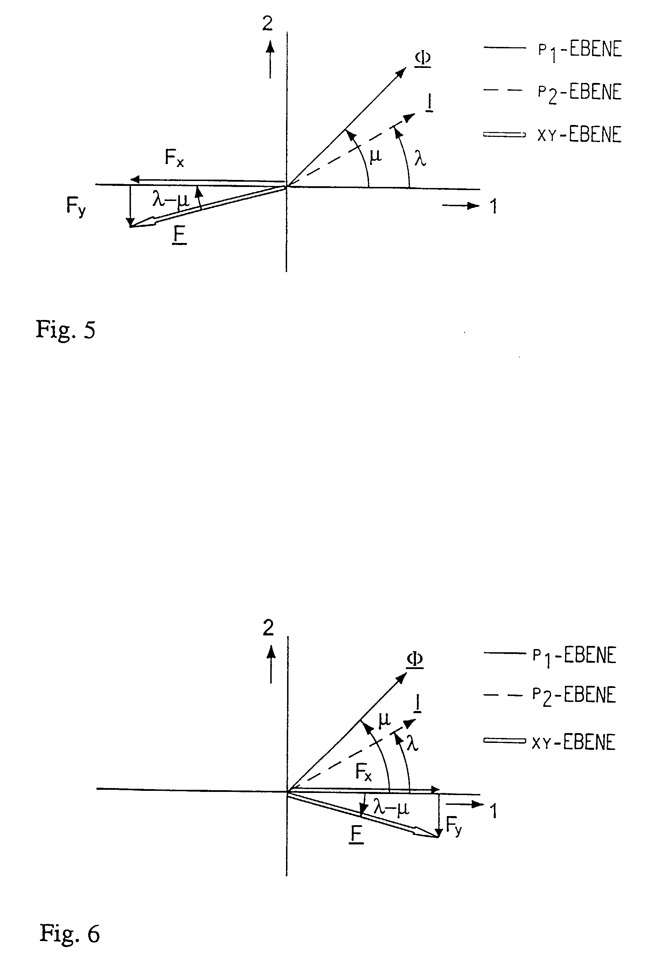

Nun ist aus dem Stand der Technik bekannt, dass in einer Drehfeldmaschine ebenfalls Lorentz-Querkräfte erzeugt werden können. Lorentz-Kräfte sind Kräfte, die auf einen stromdurchflossenen Leiter in einem Magnetfeld wirken. Bei sinusförmiger Strom- und Induktionsverteilung in der Maschine greifen diese radial am Rotor an und bewirken ein Drehmoment. Durch Kombination einer $p_1$-polpaarigen Induktionsverteilung und einer ($p_2 = p_1 \pm 1$)-polpaarigen Stromverteilung ist es nun möglich eine Lorentz-Querkraft zu erzeugen (vergl. Fig 4). Analog der Maxwell-Querkraft, lässt sich die Lorentz-Querkraft durch Vektoren beschreiben. Es sind dies der Stromvektor $\underline{I}$ und der Flussvektor $\underline{\Phi}$. Der Betrag der Lorentz-Querkraft ist proportional zum Produkt von Strom- und Flussbetrag. Werden die Vektoren in ihren elektrischen Ebenen betrachtet, so ist die Richtung der Lorentz-Querkraft ebenfalls nur von der relativen Lage der beiden Vektoren zu einander abhängig. Für den Fall $p_2 = p_1 + 1$ zeigt der Lorentz-Querkraftvektor gerade in die Richtung des Stromvektors, relativ zum Flussvektor (vergl. Fig 6). Für den Fall $p_2 = p_1 - 1$ muss der Lorentz-Querkraftvektor noch zusätzlich an der 2-Achse gespiegelt werden (vergl. Fig 5).

Analog zur Maxwell-Querkraft kann somit in der Drehfeldmaschine eine Lorentz-Querkraft erzeugt werden, die vom Antriebsfluss und vom Steuerstrom abhängt. Diese wird im folgenden als Lorentz-Nutzkraft bezeichnet und ist durch die folgende Vektorkomponentengleichung definiert:

Analog zur Maxwell-Querkraft kann somit in der Drehfeldmaschine eine Lorentz-Querkraft erzeugt werden, die vom Antriebsfluss und vom Steuerstrom abhängt. Diese wird im folgenden als Lorentz-Nutzkraft bezeichnet und ist durch die folgende Vektorkomponentengleichung definiert:

$$F_{Lx} = \pm \frac{mp_1w_2}{2rw_1}\left(i_{S2d}^{(p_2)} \cdot \Psi_{1d}^{(p_1)} + i_{S2q}^{(p_2)} \cdot \Psi_{1q}^{(p_1)}\right)$$

$$F_{Ly} = +\frac{mp_1w_2}{2rw_1}\left(i_{S2q}^{(p_2)} \cdot \Psi_{1d}^{(p_1)} - i_{S2d}^{(p_2)} \cdot \Psi_{1q}^{(p_1)}\right) \quad \Big|p_2 = p_1 \pm 1$$

Auf der Ausnutzung dieser Lorentz-Nutzkraft basieren die zum Stand der Technik gehörenden Vorschläge von Bichsel zur Querkraft-Erzeugung in der elektrischen Maschine. Da aber der Steuerstrom in der Steuerwicklung immer auch einen Steuerfluss verursacht, ist die Lorentz-Nutzkraft immer von einer Lorentz-Querkraft begleitet, die aus diesem Steuerfluss und dem Antriebsstrom resultiert. Sie wird im folgenden Lorentz-Störkraft genannt, da sie je nach Bauart der Maschine die gewünschte Lorentz-Nutzkraft schwächt und ebenfalls unkontrollierbare, vom drehmomentbildenden Antriebsstrom abhängige Komponenten beinhaltet.
bestimmt ist und der Lorentz-Störkraft nach der Gleichung

$$F_{Sx} = \mp \frac{mp_1w_1}{2rw_2}\left(i_{S1d}^{(p_1)} \cdot \Psi_{2d}^{(p_2)} + i_{S1q}^{(p_1)} \cdot \Psi_{2q}^{(p_2)}\right)$$

$$F_{Sy} = -\frac{mp_1w_1}{2rw_2}\left(i_{S1q}^{(p_1)} \cdot \Psi_{2d}^{(p_2)} - i_{S1d}^{(p_1)} \cdot \Psi_{2q}^{(p_2)}\right) \quad \Big|p_2 = p_1 \pm 1$$

Die obigen Gleichungen gelten in einem beliebigen Maschinenkoordinatensystem. Werden nun die obigen Querkraftgleichungen in einem Koordinatensystem (F) dargestellt, das mit dem in der $p_1$-Ebene gemessenen Argument des Antriebsflussvektors $\underline{\Psi}^{(p_1)}$ umläuft, verschwindet die Querkomponente des Antriebsflusses $\Psi_{1q}^{(p_1)}$ und damit der zweite Term in den Nutzkraftgleichungen. Im Falle der Asynchronmaschine heben sich zudem der erste Term der Lorentz-Nutzkraftgleichung und der Lorentz-Störkraftgleichung auf. Im Falle der selbstgeführten Synchronmaschine, verschwindet die d-Komponente des Ständerstromes $i_{S1d}$. Die Querkraftgleichung laut somit im Koordinatensystem (F):

$$F_x = K_{Fx} \cdot i_{S2d}^{(F,p_2)} \cdot \Psi_1 - K_{Sx} L_2 \cdot i_{S2q}^{(F,p_2)} \cdot i_{S1q}^{(F,p_1)}$$

$$F_y = K_{Fy} \cdot i_{S2d}^{(F,p_2)} \cdot \Psi_1 - K_{Sy} L_2 \cdot i_{S2d}^{(F,p_2)} \cdot i_{S1q}^{(F,p_1)}$$

oder

$$\underline{F}_x = \underline{i}_{S2}^{(F,p_2)} \cdot \underline{K}_F \cdot \Psi_1 \qquad - \begin{bmatrix} 0 & 1 \\ 1 & 0 \end{bmatrix} \cdot \underline{i}_{S2}^{(F,p_2)} \cdot \underline{K}_S \cdot L_2 \cdot i_{S1q}^{(F,p_1)}$$

Die Nutzkraftkonstanten $K_{Fx}$, $K_{Fy}$ und die Störkraftkonstanten $K_{Sx}$, $K_{Sy}$ sind je nach Wicklungskombination ($p_2 = p_1 +$ oder $p_2 = p_1 -$ ) und Maschinentyp (Synchronmaschine oder Asynchronmaschine) unterschiedlich definiert. Mit der Maxwell-Kraftkonstante

$$K_M = \frac{\pi p_1 p_2 L_2}{4 l r \mu_0 w_1 w_2},$$

der Lorentz-Störkraftkonstante

$$K_S = \frac{m p_2 w_1}{2 r w_2}$$

und der LorentzNutzkraftkonstante $K_L$, die für die Synchronmaschine zu

$$K_L = \frac{m p_1 w_2}{2 r w_1}$$

und für die Asynchronmaschine zu $K_L = 0$ wird, gilt für den Fall $p_2 = p_1 +$ :
$K_{Fx} = K_{Fy} = K_M + K_L$ und $K_{Sx} = K_{Sy} = K_S$
und für den Fall $p_2 = p_1 -$ :
$K_{Fs} = K_M - K_L$, $K_{Fx} = -K_M + K_L$ und $K_{Sx} = -K_S$, $K_{Sy} = K_S$.

Wie die obige Vektorgleichung zeigt, ist die Darstellung der insgesamt in der Maschine wirkenden Querkräfte im Koordinatensystem (F) sehr einfach.

Kern des erfindungsgemässen Steuerverfahrens ist es also, dass die Bestimmung des Steuerstromvektors in eben diesem Koordinatensystem (F) in der $p_2$-Ebene erfolgt und durch eine Koordinatentransformation anschliessend ins Ständerkoordinatensystem überführt wird.

Eine Verdrehung der beiden Wicklungssysteme zu einander um den Winkel $\alpha_{1,2}$ und gegenüber der geometrischen x-Achse um den Winkel $\alpha_0$ kann durch eine zusätzliche Drehung des Steuerstromvektors um den Winkel $\rho_0^{(p_2)} = \alpha_0 + \frac{p_2}{p_1} \alpha_{1,2}$ berücksichtigt werden. Die Bestimmung des Steuerstromvektors in der $p_2$-Ebene erfolgt dann in einem mit dem Winkel $\rho^{(p2)} = \rho_0^{(p_2)} + \gamma_s^{(p_1)}$ umlaufenden Koordinatensystem (T).

Falls in der obigen Gleichung der Antriebsfluss konstant gehalten wird, ist der Nutzanteil der Querkraft direkt proportional zum Steuerstrom. Da die Störkraft im allgemeinen klein ist und falls in der Maschine kein Drehmoment aufgebaut wird, sogar ganz verschwindet, kann der Steuersollstromvektor in diesem Fall durch einfache Multiplikation des Sollkraftvektors mit einer Konstante bestimmt werden. Eine Änderung des Flussbetrages kann durch Parameteradaption berücksichtigen werden.

Einem weiteren Erfindungsgedanken entspricht nun die Idee, den Steuerstromsollvektor über eine Entkopplungsgleichung zu bestimmen.

Nach dem Steuerstrom aufgelöst, lauten die Kraftkomponentengleichungen:

$$i_{S2d}^{*(F,p_2)} = \frac{F_x^* K_{Fy}\psi_1 + F_y^* K_{Sx}L_2 i_{S1q}^{(F,p_1)}}{K_{Fx}K_{Fy}\psi_1^2 - K_{Sx}K_{Sy}L_2^2 i_{S1q}^{(F,p_1)^2}} \quad , \quad i_{S2d}^{*(F,p_2)} = \frac{F_y^* K_{Fx}\psi_1 + F_x^* K_{Sy}L_2 i_{S1q}^{(F,p_1)}}{K_{Fx}K_{Fy}\psi_1^2 - K_{Sx}K_{Sy}L_2^2 i_{S1q}^{(F,p_1)^2}}$$

(Mit einem * werden in den Gleichungen die Sollgrössen markiert). Aufgrund des gewünschten Kraftvektors

$$\underline{F}^* = \begin{pmatrix} F_x^* \\ F_y^* \end{pmatrix} \quad ,$$

und mittels Kenntnis der in Flusskoordinaten des Antriebsflusses $\underline{\Psi}^{(p_1)}$, in der $p_1$-Ebene betrachteten Maschinengrössen $i_{S1q}^{(F,p_1)}$ und $\Psi_1$, lässt sich laufend der Steuersollstromvektor $\underline{i}_{S2}^{*(F,p_2)}$ in Flusskoordinaten der $p_2$-Ebene berechnen. Eine Verdrehung der beiden Wicklungssysteme zu einander um den Winkel $\alpha_{1,2}$ und gegenüber der geometrischen x-Achse um den Winkel $\alpha_0$ kann wie gesagt durch eine zusätzliche Drehung des Steuerstromvektors um den Winkel

$$\rho_0^{(p_2)} = \alpha_0 + \frac{p_2}{p_1}\alpha_{1,2}$$

berücksichtigt werden. Die Berechnung des Steuersollstromvektors in der $p_2$-Ebene erfolgt dann in einem mit dem Winkel $\rho^{(p_2)} = \rho_0^{(p_2)} + \gamma_s^{(p_1)}$ umlaufenden Koordinatensystem (T) nach der folgenden Entkopplungsgleichung:

$$i_{S2d}^{*(T,p_2)} = \frac{F_x^* K_{Fy}\psi_1 + F_y^* K_{Sx}L_2 i_{S1q}^{(F,p_1)}}{K_{Fx}K_{Fy}\psi_1^2 - K_{Sx}K_{Sy}L_2^2 i_{S1q}^{(F,p_1)^2}} \quad , \quad i_{S2d}^{*(T,p_2)} = \frac{F_y^* K_{Fx}\psi_1 + F_x^* K_{Sy}L_2 i_{S1q}^{(F,p_1)}}{K_{Fx}K_{Fy}\psi_1^2 - K_{Sx}K_{Sy}L_2^2 i_{S1q}^{(F,p_1)^2}}$$

Der so im Koordinatensystem (T) berechnete Steuersollstromvektor kann durch Drehung um $\rho^{(p_2)}$ ins Statorkoordinatensystem der $p_2$-polpaarigen Wicklung transformiert werden:

$$\underline{i}_{S2}^{*(S,p_2)} = \underline{D}(\rho)\cdot\underline{i}_{S2}^{*(T,p_2)}$$

Der so erhaltene Steuersollstromvektor $\underline{i}_{S2}^{*(S,p_2)}$ wird als Sollwertvektor eines Stromspeisegerätes verwendet, das die Steuerwicklung mit dem Steuerstrom $\underline{i}_{S2}^{(S,p_2)}$ speist.

Ein bevorzugtes Ausführungsbeispiel zeichnet sich dadurch aus, dass die Drehzahl und/oder das Drehmoment der Maschine wie bei einer konventionellen Drehfeldmaschine über die Antriebswicklung mittels eines allgemein bekannten, beliebigen Steuer- oder Regelverfahrens wie beispielsweise über eine Kennliniensteuerung oder eine feldorientierte Regelung, gesteuert oder geregelt wird, die aufgrund dieser Steuerung der Antriebswicklung resultierenden Maschinengrössen $i_{S1q}^{(F,p_1)}$ und $\Psi_1$ wie auch das Argument des Antriebsflussvektors $\underline{\Psi}_1^{(p_1)}$, $\gamma_s^{(p_1)}$ laufend durch direkte Messung, durch Berechnung aus einfach messbaren Maschinengrössen wie beispielsweise Ständerspannungen, Ständerströme, Rotordrehzahl, Rotordrehwinkel... über die Maschinengleichungen oder mittels eines Zustandsbeobachters sowie durch Berechnung aus Messgrössen und Antriebssollwerten bestimmt werden, mit Hilfe dieser, aufgrund der Querkraftsollwerte über die oben definierten Entkopplungsgleichungen die Berechnung des Steuerstromvektors $\underline{i}_{S2}^{*(T,p_2)}$ in einem mit dem Winkel $\gamma_s^{(p_1)}$ umlaufenden und um den konstanten Winkel $\rho_0^{(p_2)}$ gedrehten Koordinatensystem (T) erfolgt, dieser Steuerstromvektor $\underline{i}_{S2}^{*(T,p_2)}$ laufend durch eine Drehtransformation um den Winkel $\rho^{(p2)} = \rho_0^{(p_2)} + \gamma_s^{(p_1)}$ in Ständerkoordinaten transformiert wird und der so resultierende Steuerstromvektor $\underline{i}_{S2}^{*(S,p_2)}$ als Stromsollwert für ein Stromspeisegerät verwendet wird, das die Steuerwicklung mit dem Steuerstrom $\underline{i}_{S2}^{(S,p_2)}$ speist.

Weitere Ausführungsbeispiele für das Verfahren ergeben sich aus den entsprechenden Unteransprüchen.

Der Kern des erfindungsgemässen Steuergerätes besteht darin, dass im Steuergerät erste Mittel vorhanden sind, welche aus Messgrössen und/oder Sollgrössen des Antriebs den Antriebsfluss in Betrag und Phase sowie den momentbildenden Anteil des Antriebswicklungsstroms bestimmen, und zweite Mittel aufgrund dieser Grössen und eines Sollquerkraftvektors mittels dem erfindungsgemässen Steuerverfahren den Sollwert des Steuerstromvektors $\underline{i}_{S2}^{*(S,p_2)}$ bestimmen. Vierte Mittel sind vorgesehen um aus dem Sollwert des Steuerstromvektors $\underline{i}_{S2}^{*(S,p_2)}$ die Sollwerte der $m_2$ Phasenströme der Steuerwicklung durch 2 zu $m_2$-Phasentransformation zu berechnen. Fünfte Mittel sind vorgesehen, die aufgrund der Phasenstromsollwerte die $m_2$ Stränge der Steuerwicklung mit Strömen speisen. Zudem sind dritte Mittel vorgesehen, welche die Antriebswicklung nach einem an sich beliebigen Steuer- oder Regelverfahren speisen, und sicher stellen, dass in all jenen Betriebszuständen, in denen auf den Rotor eine Querkraft wirken soll, ein minimaler Antriebsfluss vorhanden ist.

Der Vorteil des erfindungsgemässen Verfahrens bzw. des Steuergerätes besteht insgesamt darin, dass die auf den Rotor der Drehfeldmaschine wirkende Querkraft genauer als beim Stand der Technik und in jedem antriebsseitigen Betriebszustand der Maschine, insbesondere auch im Stillstand des Rotors und im Feldschwächbereich, eingestellt werden kann, da der antriebsseitige Betriebszustand der Maschine erfasst wird und sowohl die in der Maschine wirkenden Lorentz-Querkräfte wie auch die Maxwell-Querkräfte durch das Steuerverfahren berücksichtigt werden.

Nachfolgend wird die Erfindung anhand von Ausführungsbeispielen im Zusammenhang mit den Zeichnungen näher erläutert.

Es zeigen:

Fig. 1     Durch Überlagerung eines magnetischen Antriebsfeldes mit der Polpaarzahl $p_1$ mit einem Steuerfeld der Polpaarzahl $p_2 = p_1 \pm 1$ kann in einer Drehfeldmaschine eine auf den Rotor wirkende Maxwell-Querkraft erzeugt werden, die je nach der gegenseitigen Lage der Felder in eine beliebige Richtung zeigen kann. Dieser Sachverhalt ist hier qualitativ für den Fall $p_1 = 1$ und $p_2 = 2$ dargestellt. Das Steuerfeld mit der Polpaarzahl 2 schwächt das Antriebsfeld mit der Polpaarzahl 1 in gewissen Bereichen und verstärkt es auf der Gegenseite. Durch diese Unsymmetrie wird die Maxwell-Querkraft erzeugt. Sie zeigt hier immer in die Richtung des in der $p_2$-Ebene betrachteten Steuerflussvektors $\underline{\Phi}_2$, relativ zum in der $p_1$-Ebene betrachteten Antriebsflussvektor $\underline{\Phi}_1$. Oben zeigen sowohl Antriebsflussvektor als auch Steuerflussvektor geometrisch wie elektrisch in 1-Richtung, womit auch die Maxwell-Querkraft in 1-Richtung zeigt. Unten zeigt der Antriebsflussvektor wiederum in 1-Richtung. Der Steuerflussvektor zeigt nun aber geometrisch 45° nach oben, und elektrisch, in der 2-polpaarigen Ebene, somit in 2-Richtung, womit auch die Maxwell-Querkraft in 2-Richtung zeigt.

Fig.2     Veranschaulicht für den allgemeinen Fall $p_2 = p_1 - 1$, dass die Maxwell-Querkraft immer in die an der 1-Achse gespiegelte Richtung des in der $p_2$-Ebene betrachteten Steuerflussvektors $\underline{\Phi}_2$, relativ zum in der $p_1$-Ebene betrachteten Antriebsflussvektor $\underline{\Phi}_1$ zeigt.

Fig.3     Veranschaulicht für den allgemeinen Fall $p_2 = p_1 + 1$, dass die Maxwell-Querkraft immer in die Richtung des in der $p_2$-Ebene betrachteten Steuerflussvektors $\underline{\Phi}_2$, relativ zum in der $p_1$-Ebene betrachteten Antriebsflussvektor $\underline{\Phi}_1$ zeigt.

Fig. 4     Durch Überlagerung eines magnetischen Magnetfeldes mit der Polpaarzahl $p_1$ mit einer Stromverteilung der Polpaarzahl $p_2 = p_1 \pm 1$ kann in einer Drehfeldmaschine eine auf den Rotor wirkende Lorentz-Querkraft erzeugt werden, die je nach der gegenseitigen Lage der Felder in eine beliebige Richtung zeigen kann. Dieser Sachverhalt ist hier qualitativ für den Fall $p_1 = 1$ und $p_2 = 2$ dargestellt. Die Stromverteilung mit der Polpaarzahl 2 bewirkt im Magnetfeld mit der Polpaarzahl 1 radial am Rotor angreifende Lorentz-Kräfte, die in ihrer Summe eine Lorentz-Querkraft ergeben. Sie zeigt hier immer in die Richtung des in der $p_2$-Ebene betrachteten Stromvektors $\underline{I}$, relativ zum in der $p_1$-Ebene betrachteten Flussvektor $\underline{\Phi}$. Oben zeigen sowohl Flussvektor $\underline{\Phi}$ als auch Stromvektor geometrisch wie elektrisch in 1-Richtung, womit auch die Lorentz-Querkraft in 1-Richtung zeigt. Unten zeigt der Flussvektor wiederum in 1-Richtung. Der Stromvektor zeigt nun aber geometrisch 45° nach oben, und elektrisch, in der 2-polpaarigen Ebene, somit in 2-Richtung, womit auch die Lorentz-Querkraft in 2-Richtung zeigt.

Fig.5     Veranschaulicht für den allgemeinen Fall $p_2 = p_1 - 1$, dass die Lorentz-Querkraft immer in die an der 2-Achse gespiegelte Richtung des in der $p_2$-Ebene betrachteten Stromvektors $\underline{I}$, relativ zum in der $p_1$-Ebene betrachteten Flussvektor $\underline{\Phi}$ zeigt.

Fig.6     Veranschaulicht für den allgemeinen Fall $p_2 = p_1 + 1$, dass die Lorentz-Querkraft immer in die Richtung des in der $p_2$-Ebene betrachteten Stromvektors $\underline{I}$, relativ zum in der $p_1$-Ebene betrachteten Flussvektor $\underline{\Phi}$ zeigt.

Fig. 7     Zeigt das Ersatzschaltbild einer Drehfeldmaschine mit einer $p_1$-polpaarigen Antriebswicklung und einer ($p_2 = p_1 \pm 1$)-polpaarigen Steuerwicklung.

Fig. 8     Signalflussplan des Kerns des erfindungsgemässen Steuerverfahrens.

**Fig. 9** Signalflussplan einer Asynchronmaschine mit einer $p_1$-polpaarigen Antriebswicklung und einer ($p_2 = p_1 \pm$ 1)-polpaarigen Steuerwicklung gemäss **Fig. 7** in Vektorkom-ponenten-Darstellung.

**Fig.10** Signalflussplan einer Synchronmaschine mit einer $p_1$-polpaarigen Antriebswicklung und einer ($p_2 = p_1 \pm 1$)-polpaarigen Steuerwicklung gemäss **Fig. 7** in Vektorkomponenten-Darstellung.

**Fig. 11** Das Prinzipschaltbild eines erfindungsgemässen Steuergerätes zur Steuerung einer elektrischen Drehfeldmaschine mit Spezialwicklung zur kombinierten Erzeugung eines Drehmoments und einer Querkraft in derselben nach **Fig. 7**.

**Fig. 12** Signalflussplan eines erfindungsgemässen Verfahrens zur Berechnung des Steuerstromes einer Drehfeldmaschine nach **Fig. 7**, das eine vollständige Entkopplung der Querkraftbildung von der Drehmomentbildung erlaubt und die Maxwell-Nutzkraft, die Lorentz-Nutzkraft sowie die Lorentz-Störkraft berücksichtigt.

**Fig. 13** Signalflussplan eines erfindungsgemässen Verfahrens zur Berechnung des Steuerstromes einer Drehfeldmaschine nach **Fig. 7**, das eine teilweise Entkopplung der Querkraftbildung von der Drehmomentbildung erlaubt und nur die Maxwell-Nutzkraft sowie die Lorentz-Nutzkraft berücksichtigt.

**Fig.14** Signalflussplan eines erfindungsgemässen Verfahrens zur Berechnung des Steuerstromes einer Asynchronmaschine nach **Fig. 9**, das auf der Kombination des Verfahrens nach **Fig. 12** mit einer "Feldorientierten Regelung" des Antriebsstromes beruht.

**Fig.15** Signalflussplan eines erfindungsgemässen Verfahrens zur Berechnung des Steuerstromes einer Asynchronmaschine nach **Fig. 9,** das auf der Kombination des Verfahrens nach **Fig. 13** mit einer "Feldorientierten Regelung" des Antriebsstromes beruht.

**Fig.16** Signalflussplan eines erfindungsgemässen Verfahrens zur Berechnung des Steuerstromes einer Asynchronmaschine nach **Fig. 9**, das auf der Kombination des Verfahrens nach **Fig. 12** mit einer "Feldorientierten Steuerung" des Antriebsstromes beruht.

**Fig.17** Signalflussplan eines erfindungsgemässen Verfahrens zur Berechnung des Steuerstromes einer Asynchronmaschine nach **Fig. 9**, das auf der Kombination des Verfahrens nach **Fig. 13** mit einer "Feldorientierten Steuerung" des Antriebsstromes beruht.

**Fig.18** Signalflussplan eines erfindungsgemässen Verfahrens zur Berechnung des Steuerstromes einer Synchronmaschine nach **Fig. 10**, das auf der Kombination des Verfahrens nach **Fig. 12** mit einer "Feldorientierten Regelung" des Antriebsstromes beruht.

**Fig.19** Signalflussplan eines erfindungsgemässen Verfahrens zur Berechnung des Steuerstromes einer Synchronmaschine nach **Fig. 10**, das auf der Kombination des Verfahrens nach **Fig. 13** mit einer "Feldorientierten Regelung" des Antriebsstromes beruht.

**Fig. 20** Signalflussplan eines erfindungsgemässen Verfahrens zur Berechnung des Steuerstromes einer Synchronmaschine nach **Fig. 10**, das auf der Kombination des Verfahrens nach **Fig. 12** mit einer "Feldorientierten Steuerung" des Antriebsstromes beruht.

**Fig. 21** Signalflussplan eines erfindungsgemässen Verfahrens zur Berechnung des Steuerstromes einer Synchronmaschine nach **Fig. 10**, das auf der Kombination des Verfahrens nach **Fig. 13** mit einer "Feldorientierten Steuerung" des Antriebsstromes beruht.

**Fig. 22** Signalflussplan eines erfindungsgemässen Verfahrens zur Regelung der Querkraft einer Drehfeldmaschine nach **Fig. 7.**

**Fig. 23** Signalflussplan eines erfindungsgemässen Verfahrens zur Regelung der Rotor-Querlage einer Drehfeldmaschine nach **Fig. 7.**

**Fig. 24** "Lagerlose Drehfeldmaschine", bestehend aus zwei Teilmaschinen nach **Fig. 7**, bei der sowohl die Drehmomentbildung als auch die radiale aktive magnetische Lagerung des Rotors durch die Teilmaschinen erfolgt.

**Fig. 25** "Lagerlose Drehfeldmaschine", bestehend aus zwei Teilmaschinen nach **Fig. 7**, deren Rotor konisch geformt ist und bei der sowohl die Drehmomentbildung als auch die radiale und axiale aktive magnetische Lagerung des Rotors durch die Teilmaschinen erfolgt.

**Fig. 26** Konventionell gelagerte Drehfeldmaschine nach **Fig. 7,** in der Querkräfte auf den Rotor ausgeübt werden können.

**Fig.27** Schematische Darstellung der Beeinflussungsmöglichkeit der Rotordurchbiegung in einer Maschine, in der zusätzlich zum Drehmoment eine Querkraft aufgebracht werden kann.

Die verwendeten Bezugzeichen und deren Bedeutung sind in der Bezugzeichnungsliste zusammengefasst aufgelistet. Grundsätzlich sind in den Figuren gleiche Teile mit gleichen Bezugzeichen versehen.

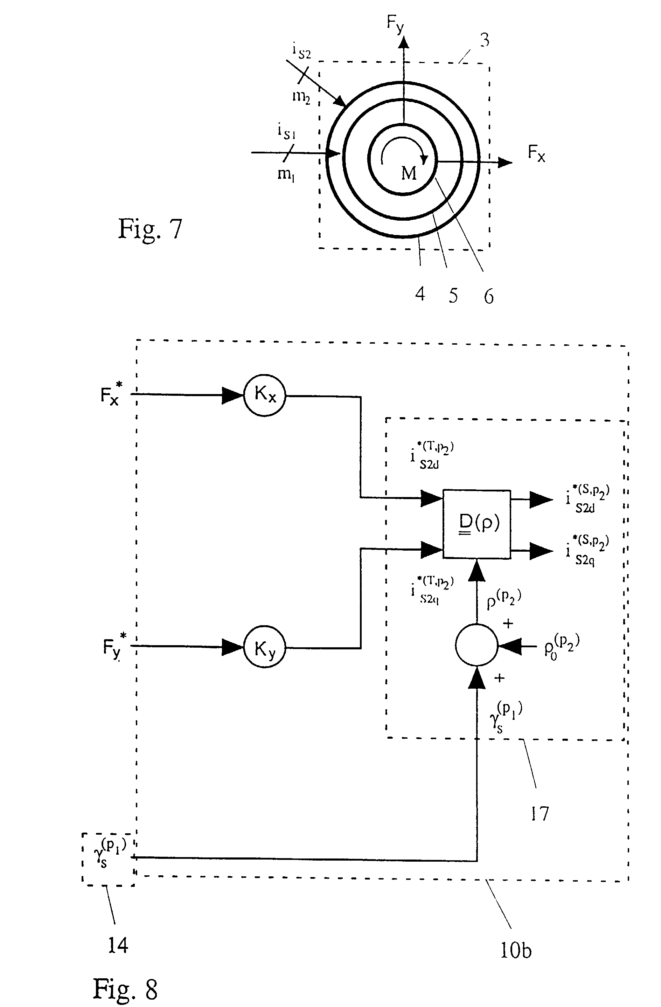

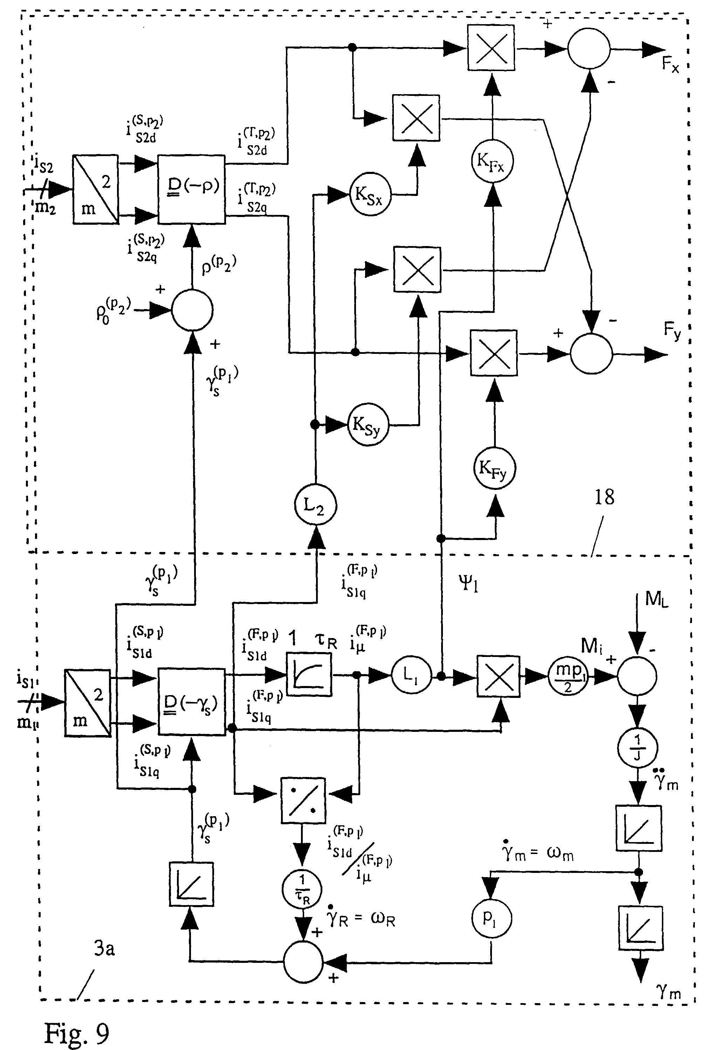

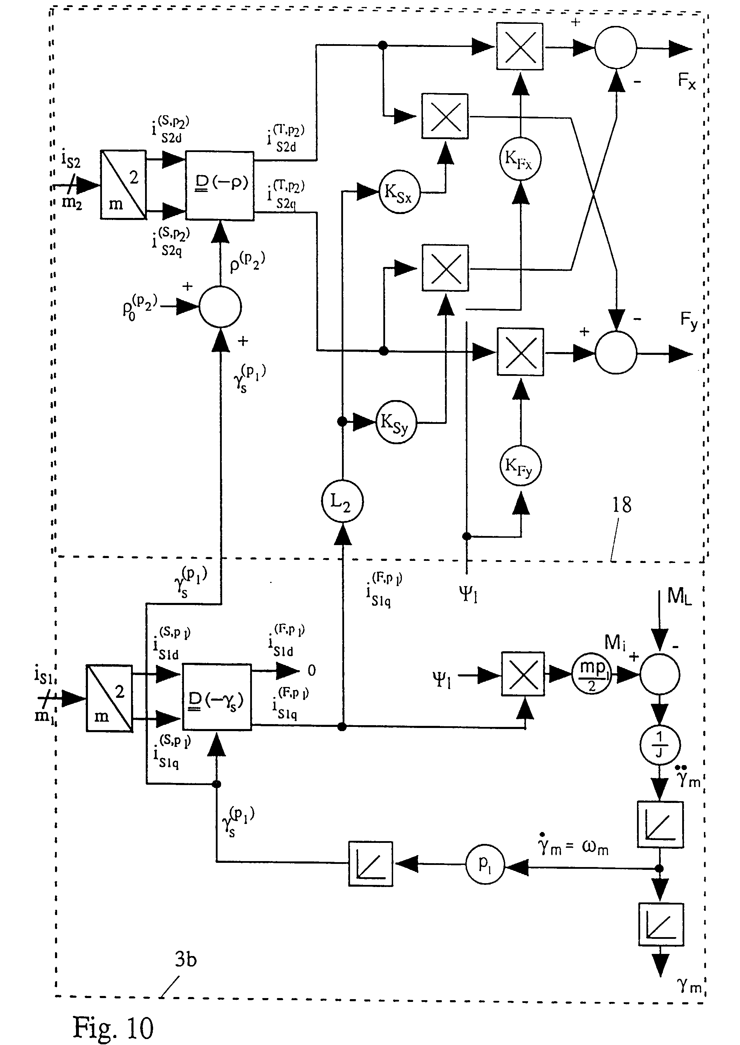

Seit langem ist bekannt (z. B. aus H. Sequenz "Die Wicklungen elektrischer Maschinen", Springer Verlag Wien, 1950), dass in einer Drehfeldmaschine durch zwei kombinierte Wicklungen mit den Polpaarzahlen p und $p \pm 1$ auf den Rotor wirkende Querkräfte erzeugt werden können. Eine solche Drehfeldmaschine kann durch das Symbol in **Figur 7** dargestellt werden. Die Antriebswicklung (**4**) mit der Polpaarzahl $p_1$, die Steuerwicklung (**5**) mit der Polpaarzahl $p_2 = p_1 \pm 1$ und der Rotor (**6**) der Drehfeldmaschine (**3**) werden durch konzentrische Kreise symbolisiert. Der Signalflussplan einer solchen Drehfeldmaschine mit Antriebs- und Steuerwicklung ist für den Fall der Asynchronmaschine in **Figur 9** und für den Fall der Synchronmaschine in **Figur 10** dargestellt. Der hier interessierende, für die Querkraftbildung verantwortliche Block (**18**) ist für beide Maschinentypen derselbe.

Ein Steuerverfahren nach einer ersten Referenz (Hermann) geht von einem Maschinenmodell aus, das nur Maxwell-Kräfte berücksichtigt und die Drehfeldmaschine nur im stationären Betrieb betrachtet. Die Antriebswicklung hängt an einem starren, dreiphasigen Drehstromnetz. Zur Steuerung des Querkraftvektors werden bei Hermann die Phasenströme ($i_{S2}$) der Steuerwicklung mittels Amplitudenmodulation aus den Antriebsströmen ($i_{S1}$) abgeleitet. Über eine Phasenjustiereinrichtung wird die Phase zwischen den Antriebsströmen und den Steuerströmen für einen fixen Arbeitspunkt fest eingestellt. Bei diesem fixen Arbeitspunkt ist der Betrag des Maschinenflusses $\Psi_1$ konstant und der Flusswinkel $\gamma_s^{(p_1)}$ ist starr mit der Phase der Antriebsströme verbunden. Da die in **Figur 9** und **Figur 10** berücksichtigte Kreuzkopplung zwischen den Steuerstromkomponenten ($i_{S2d}^{(T,p_2)}$, $i_{S2d}^{(T,p_2)}$) und den Querkraftkomponenten ($F_x$, $F_y$), die aufgrund von Lorentzkräften zustande kommt ist proportional zur momentbildenden Antriebsstromkomponente $i_{S1q}^{(F,p_1)}$ und relativ schwach. Für einen fixen Arbeitspunkt ist die auf den Rotor wirkende Querkraft also mit einem Steuerverfahren nach Hermann steuerbar. Bei einem dynamischen Betrieb der Drehfeldmaschine (Laständerung, Drehzahländerung) ist mit diesem Verfahren eine Steuerung der Querkraft jedoch nicht möglich.

Das Steuerverfahren nach einer zweiten Referenz (Bichsel) geht von einem Maschinenmodell aus, das nur Lorentz-Kräfte berücksichtigt. Eine exakte Steuerung der Querkraft ist mit diesem Verfahren nicht möglich, da im Allgemeinen die nicht berücksichtigten Maxwell-Querkräfte weit grösser sind als die Lorentz-Querkräfte.

Nach der Erfindung wird nun ein Steuerverfahren vorgeschlagen, das von dem in **Figur 9** und **Figur 10** dargestellten Modell zur Querkraftbildung (**18**), das sowohl Maxwell-Querkräfte als auch Lorentz-Querkräfte sowie beliebige Betriebszustände der Maschine berücksichtigt (nicht nur stationärer Fall), ausgeht. Der Kern dieses Steuerverfahrens ist in **Figur 8** dargestellt. In einem ersten Schritt wird der für eine gewünschte Kraftwirkung notwendige Steuerstrom, der in der Figur durch die Vektorkomponenten $i_{S2d}^{*(T,p_2)}$ und $i_{S2d}^{*(T,p_2)}$ dargestellt ist, in einem mit dem Flussvektor umlaufenden und zusätzlich um einen festen Winkel gedrehten Koordinatensystem (T), bestimmt. In einem zweiten Schritt wird der so berechnete Steuerstromsollvektor durch Drehung um den Winkel $\rho^{(p2)}$ ins Statorkoordinatensystem transformiert (**17**). Der Transformationswinkel $\rho^{(p2)} = \rho_0^{(p2)} + \gamma_s^{(p_1)}$ wird laufend aus dem im Statorkoordinatensystem, in der $p_1$-Ebene gemessenen Argument des Flussvektors $\gamma_s^{(p_1)}$ und einem festen Drehwinkel $\rho_0^{(p2)}$, der die Verdrehung der beiden Wicklungssysteme zu einander und gegenüber der geometrischen x-Achse berücksichtigt, gebildet. Der konstante Anteil des Drehwinkels, $\rho_0^{(p2)}$ ist durch die Beziehung

$$\rho_0^{(p_2)} = \alpha_0 + \frac{p_2}{p_1}\alpha_{1,2}$$

definiert, wobei $\alpha_0$ einer allfälligen Verdrehung der d-Achse der Antriebswicklung gegenüber der x-Achse des geometrischen Koordinatensystems und $\alpha_{1,2}$ einer allfälligen Verdrehung der d-Achsen von Antriebs- und Steuerwicklung untereinander entspricht.

Die Bestimmung des Steuerstroms im Koordinatensystem (T), aufgrund der gewünschten Querkraft ist auf vielfältige Weise denkbar. Im einfachsten Fall, wenn die Lorentzstörkräfte klein sind und wenn der Flussbetrag konstant gehalten wird, ist der Steuerstrom direkt proportional zur gewünschten Querkraft und kann somit aus dieser durch Multiplikation mit einer konstanten Grösse gewonnen werden. Dieser einfachste Fall ist auch in **Figur 8** dargestellt.

Für eine Wicklung mit $p_2 = p_1 + 1$ haben die beiden Konstanten $F_x$ und $F_y$ positives Vorzeichen und den selben Betrag. Für $p_2 = p_1 - 1$ hat $F_x$ positives und $F_y$ negatives Vorzeichen. Eine Änderung des Flusses kann durch Adaption der Konstanten berücksichtigt werden.

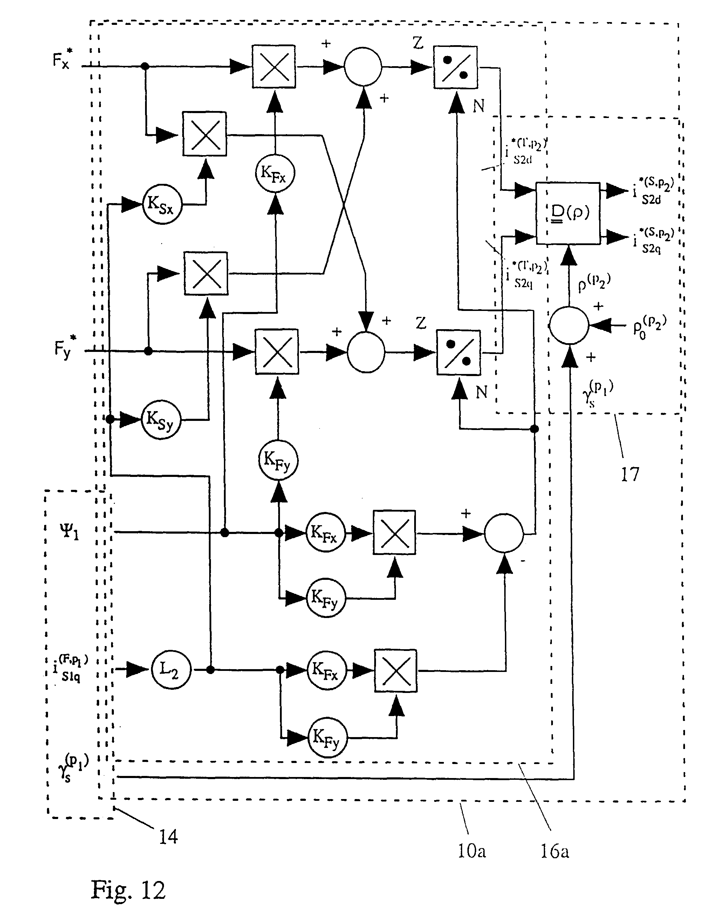

Einem weiteren Erfindungsgedanken entspricht die genaue Berechnung des Steuerstromes im Koordinatensystem (T), mittels Kenntnis der für die Kopplung zwischen der Drehmomentbildung in der Drehfeldmaschine (unterer Block in **Figur 9** und **10**) und der Querkraftbildung (**18**) verantwortlichen Grössen $\Psi_1$ und $i_{S1q}^{(F,p_1)}$. Eine Möglichkeit zur Bestimmung des Steuerstromes in vektorieller Form ist in **Figur 12** dargestellt. Die Berechnung des Steuerstromsollvektors $i_{S2}^{*(S,p_2)}$ (dargestellt durch die Vektorkomponenten $i_{S2d}^{*(S,p_2)}$, $i_{S2q}^{*(S,p_2)}$) erfolgt hier komponentenweise mittels einer Entkopplungsgleichung (**16a**):

$$i_{S2d}^{*(T,p_2)} = \frac{F_x^* K_{Fy} \Psi_1 + F_y^* K_{Sx} L_2 i_{S1q}^{(F,p_1)}}{K_{Fx} K_{Fy} \Psi_1^2 - K_{Sx} K_{Sy} L_2^2 i_{S1q}^{(F,p_1)\,2}} \ , \ i_{S2q}^{*(T,p_2)} = \frac{F_y^* K_{Fx} \Psi_1 + F_x^* K_{Sy} L_2 i_{S1q}^{(F,p_1)}}{K_{Fx} K_{Fy} \Psi_1^2 - K_{Sx} K_{Sy} L_2^2 i_{S1q}^{(F,p_1)\,2}}$$

aus dem gewünschten Kraftvektor

$$\underline{F}^* = \begin{pmatrix} F_x^* \\ F_y^* \end{pmatrix} \ ,$$

mit Hilfe der in Flusskoordinaten in der $p_1$-Ebene betrachteten, momentbildenden Antriebsstromkomponente $i_{S1q}^{(F,p_1)}$, aus dem Antriebsfluss betrag $\Psi_1$ und aus den Maschinenparametern $L_2$, $K_{Fx}$, $K_{Fy}$, $K_{Sx}$, und $K_{Sy}$. Diese sind für den Fall $p_2 = p_1 + 1$ durch die Beziehungen $K_{Fx} = K_{Fy} = K_M + K_L$ und $K_{Sx} = K_{Sy} = K_S$ und für den Fall $p_2 = p_1 - 1$ durch die Beziehungen $K_{Fx} = K_M - K_L$, $K_{Fx} = -K_M + K_L$ und $K_{Sx} = -K_S$, $K_{Sy} = K_S$ definiert.

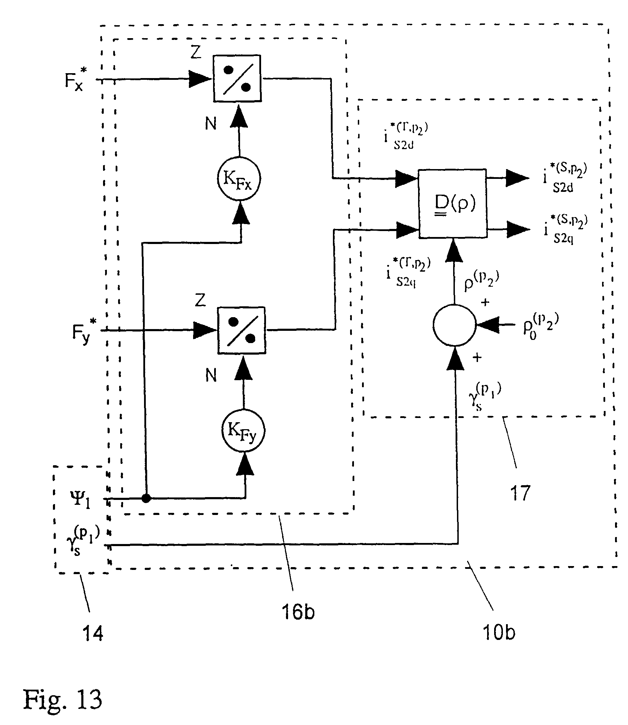

Der Einfluss der Lorentz-Störkraft (zu $i_{S1q}^{(F,p_1)}$ proportionaler Anteil in (**18**) ist meistens klein, verglichen mit der maximalen Maxwell-Querkraft. Er kann deshalb in vielen Anwendungsfällen (z. B. im Falle einer der Querkraftsteuerung überlagerten Querkraftregelung) vernachlässigt werden. Der erste Berechnungsschritt (**16a**) kann dann wesentlich vereinfacht werden, da die durch die Lorentz-Störkraft bedingte Kreuzkopplung nicht mehr kompensiert werden muss. Der Signalflussplan eines solchermassen vereinfachten Verfahrens ist in **Figur 13** (**10b**) abgebildet. Während die Koordinatentransformation (**17**) gleich bleibt, wird die Entkopplung (**16b**) auf eine komponentenweise Division durch den Flussbetrag reduziert. Sie lautet:

$$i_{S2d}^{*(T,p_2)} = \frac{F_x^*}{K_{Fx} \Psi_1} \ , \ i_{S2q}^{*(T,p_2)} = \frac{F_y^*}{K_{Fy} \Psi_1} \ .$$

Der nach obigen Methoden berechnete Sollwert des Steuerstromvektors wird einem Stromspeisegerät (z. B. Stromrichter) zugeführt, dass die $m_2$-phasige (die Strangzahl ist beliebig wählbar) Steuerwicklung der Drehfeldmaschine mit dem $m_2$-phasigen Steuerstrom $i_{S2}$ (**Figur 9** und **10**) speist. Die Antriebswicklung kann mit Drehströmen beliebiger Frequenz (auch Frequenz 0) gespeist werden. Das heisst, die Antriebswicklung kann sowohl an einem starren Drehstromnetz als auch an einer Drehstromquelle mit variabler Frequenz und Amplitude betrieben werden. Besonders interessant ist natürlich der Betrieb an einem Umrichter. Das für den Antrieb der Maschine gewählte Steuerverfahren kann an sich beliebig sein (Kennliniensteuerung, feldorientierte Steuerung oder Regelung usw. ). Die einzige Bedingung an das Verfahren ist, dass es sicherstellen muss, dass in denjenigen Betriebsfällen, in denen Querkräfte erzeugt werden sollen, ein minimaler Maschinenfluss vorhanden ist.

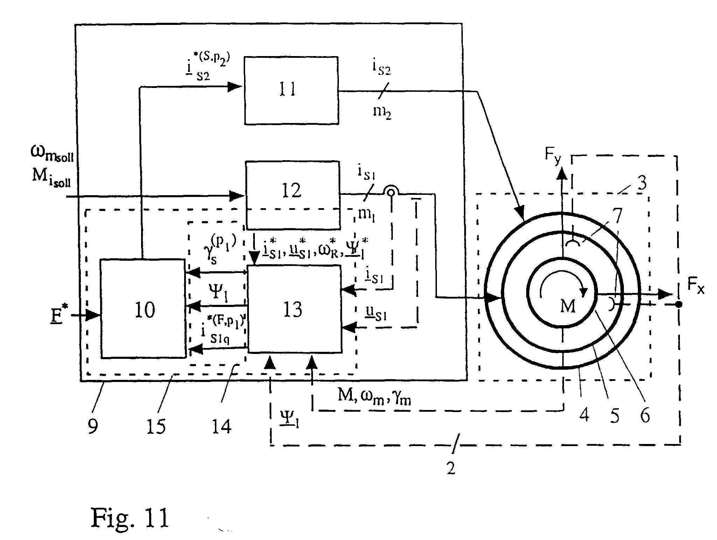

Die gerätetechnische Realisierung des Steuerverfahrens ist mit einem Steuergerät denkbar, das schematisch in **Figur 11** dargestellt ist. Das Steuergerät (**9**) besteht aus einem Signalverarbeitungsmodul (**15**), einem $m_2$-phasigen Stromspeisemodul (**11**) zur Speisung der Steuerwicklung und einem $m_1$-phasigen Regel- und Speisemodul zur Speisung der Antriebswicklung (**12**). Das Stromspeisemodul (**11**) hat die Aufgabe die Steuerwicklung mit $m_2$ Phasenströmen so zu speisen, dass der Istwert des Statorstromvektors möglichst dem vom Signalverarbeitungsmodul vorgegebenen Sollwert entspricht. Diese Aufgabe kann beispielsweise von einem $m_2$-phasigen, stromeinprägenden Umrichter (Spannungszwischenkreisumrichter mit Stromregler oder Stromzwischenkreisumrichter) oder von einem $m_2$-kanaligen Linearstromverstärker erfüllt werden. Als Regel- und Speisemodul zur Speisung der Antriebswicklung (**12**) kann ebenfalls ein $m_1$-phasiger Umrichter oder ein $m_1$-phasiger Linearverstärker verwendet werden, der mit einem nach einem beliebigen Verfahren arbeitenden Antriebsregler kombiniert ist. Das Signalverarbeitungsmodul (**15**) wird am einfachsten mit einem Digitalrechner, beispielsweise mit einem Signalprozessorsystem realisiert. Es besteht aus zwei Teilmodulen: In Block (**10**) wird der Signallaufplan (**10a**) in **Figur 12** oder (**10b**) in **Figur 13** realisiert. In Block (**13**) werden die Grössen $\Psi_1$, $\gamma_s^{(p_1)}$ und $i_{S1q}^{(F,p_1)}$ mit Hilfe der Maschinengleichungen aus Mess- und/oder Sollgrössen (mit * bezeichnet) bestimmt. Die Blöcke (**10**) und (**13**) können als Teilprogramme auf dem selben Mikrorechner implementiert sein, sie können als Programme auf verschiedenen Prozessoren laufen oder sie können ganz oder teilweise durch eine spezialisierte digitale oder analoge Signalverarbeitungshardware realisiert sein.

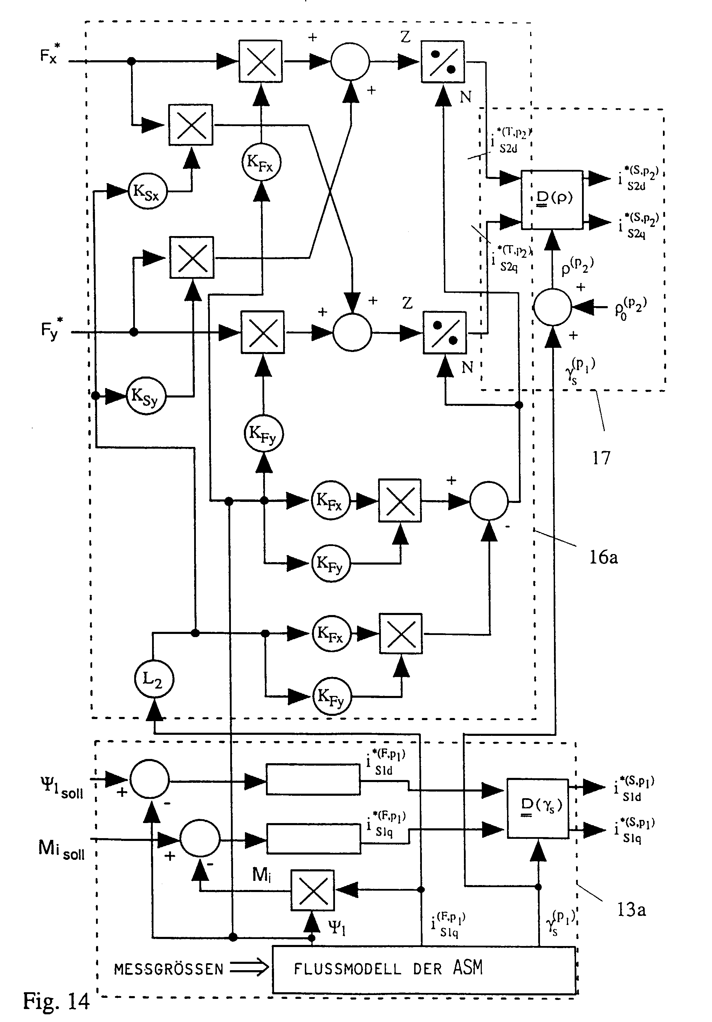

Obwohl für die Steuerung der Antriebswicklung ein beliebiges Steuerverfahren möglich ist, ist es sinnvoll, den Antrieb feldorientiert zu steuern oder zu regeln. Da ja für das erfindungsgemässe Verfahren zur Steuerung der Querkraft der Flussvektor in Betrag und Phase ohnehin bekannt sein muss, ist der zusätzliche Aufwand für eine feldorientierte Antriebsregelung nur noch gering. Die **Figuren 14 bis 21** zeigen verschiedene Ausführungsbeispiele sowohl für die Asynchronmaschine als auch für die Synchronmaschine.

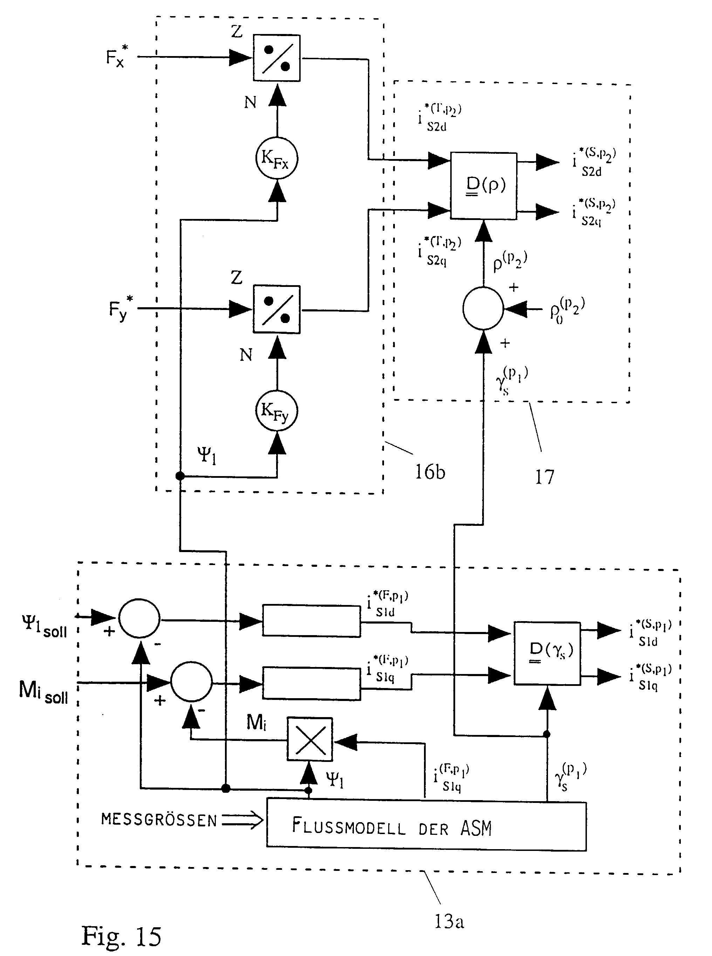

**Figur 14** zeigt das Beispiel der Kombination einer feldorientierten Drehmomentregelung einer Asynchronmaschine (**13a**) mit der erfindungsgemässen Querkraftsteuerung mit vollständiger Entkopplung, welche die Lorentz-Störkraft berücksichtigt (**16a**). Die Magnetiesierungskomponente des Antriebsstroms $i_{S1d}$ und sein drehmomentbildender Anteil $i_{S1q}$ werden hier in einem auf den Flusszeiger orientierten, mit $\gamma_s^{(p_1)}$ umlaufenden Koordinatensystem (F) in der $p_1$-Ebene geregelt. So ist eine Entkopplung von Drehmoment- und Flussbildung gewährleistet, wodurch eine sehr dynamische Drehmomenteinstellung über $i_{S1q}$ erreicht wird. Anschliessend wird über eine Koordinatendrehung um $\gamma_s^{(p_1)}$ der Antriebsstrom ins Ständerkoordinatensystem transformiert. Die Grössen $\Psi_1$, $\gamma_s^{(p_1)}$ und $i_{S1q}^{(F,p_1)}$ werden hier sowohl für feldorientierte Drehmoment-Regelung als auch für das Querkraftsteuerverfahren gemeinsam genutzt. Der Vorteil dieser Kombination für die Querkraftsteuerung liegt in der genauen Regelung des Flussbetrages auf einen vorgegebenen Wert. Die feldorientierte Antriebsregelung lässt sich natürlich auch mit der vereinfachten erfindungsgemässen Querkraftsteuerung mit nur teilweiser Entkopplung, welche die Lorentz-Störkraft nicht berücksichtigt (**16b**), kombinieren. Dieses Beispiel ist in **Figur 15** dargestellt. Im Unterschied zu **Figur 14** wird hier $i_{S1q}^{(F,p_1)}$ nicht für die Querkraftsteuerung benötigt. Im übrigen gilt auch hier das zu **Figur 14** gesagte. Eine Vereinfachung gegenüber den Steuerverfahren in **Figur 14** und **15** ergibt sich daraus, dass der Antriebsfluss nicht geregelt, sondern nur feldorientiert gesteuert wird.

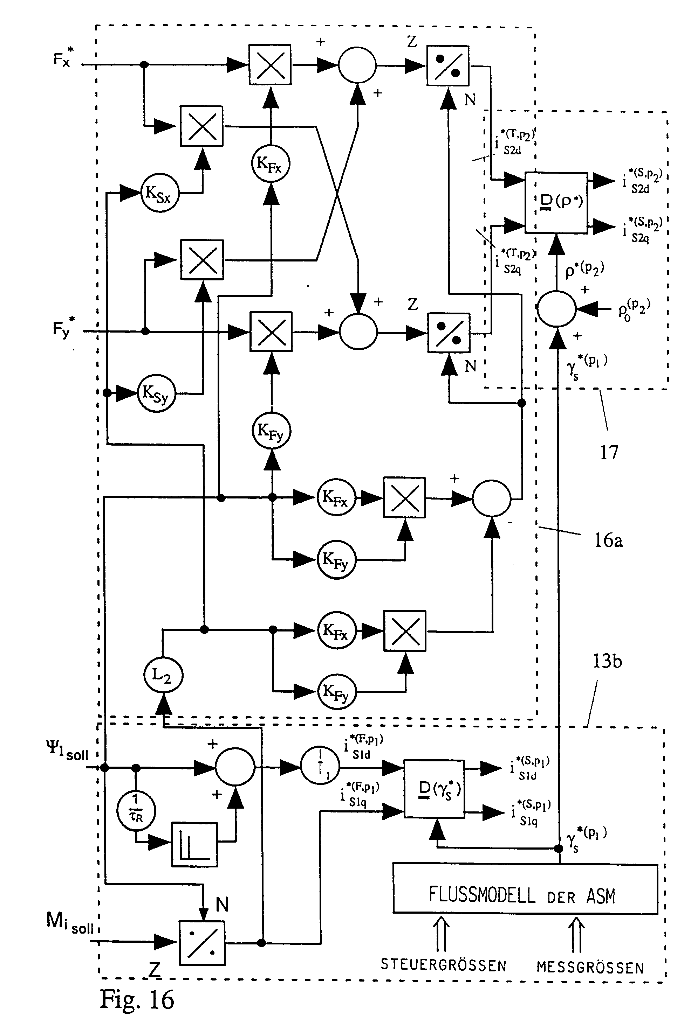

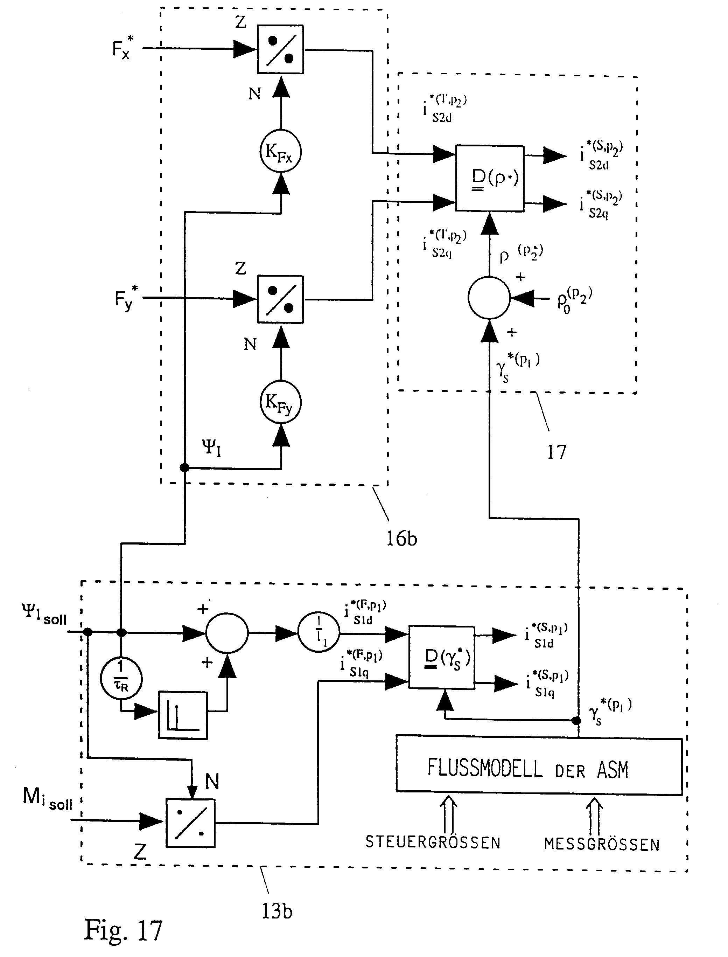

**Figur 16** zeigt das Beispiel der Kombination einer möglichen feldorientierten Drehmomentsteuerung der Asynchronmaschine (**13b**) mit der erfindungsgemässen Querkraftsteuerung mit vollständiger Entkopplung, welche die Lorentz-Störkraft berücksichtigt (**16a**). Im Gegensatz zur feldorientierten Regelung werden hier die Magnetiesierungskomponente des Antriebsstroms $i_{S1d}$ und sein drehmomentbildender Anteil $i_{S1q}$ im antriebsflussorientierten, umlaufenden Koordinatensystem (F) nicht geregelt, sondern gesteuert. Die wesentlichste Vereinfachung ergibt sich daraus, dass der Flussvektor in Betrag und Richtung nicht bestimmt werden muss. Es wird nur ein Modellwert des Flusswinkels ($\gamma_s^{*(p_1)}$) für die Transformation des Steuerstroms vom umlaufenden Koordinatensystem (F) ins Ständer-Koordinatensystem benutzt. Der Modellwert $\gamma_s^{*(p_1)}$ kann aufgrund von Sollgrössen (z.B. $M_{isoll}$, $\Psi_{1soll}$) und eventuell einfach erfassbaren Messgrössen (z.B. $\omega_m$, $\gamma_m$) aus dem Maschinenmodell bestimmt werden. $\gamma_s^{*(p_1)}$ wird auch für die Koordinatentransformation im Querkraftsteuerverfahren verwendet. An der Stelle der Grössen $\Psi_1$, $i_{S1q}^{(F,p_1)}$ werden die Steuergrössen $\Psi_1^*$, $i_{S1q}^{*(F,p_1)}$ benutzt. Die feldorientierte Antriebssteuerung lässt sich natürlich auch mit der vereinfachten erfindungsgemässen Querkraftsteuerung mit nur teilweiser Entkopplung, welche die Lorentz-Störkraft nicht berücksichtigt (**16b**), kombinieren. Dieses Beispiel ist in **Figur 17** dargestellt. Im Unterschied zu **Figur 16** wird hier $i_{S1q}^{*(F,p_1)}$ nicht für die Querkraftsteuerung benötigt. Im übrigen gilt auch hier das zu **Figur 16** gesagte.

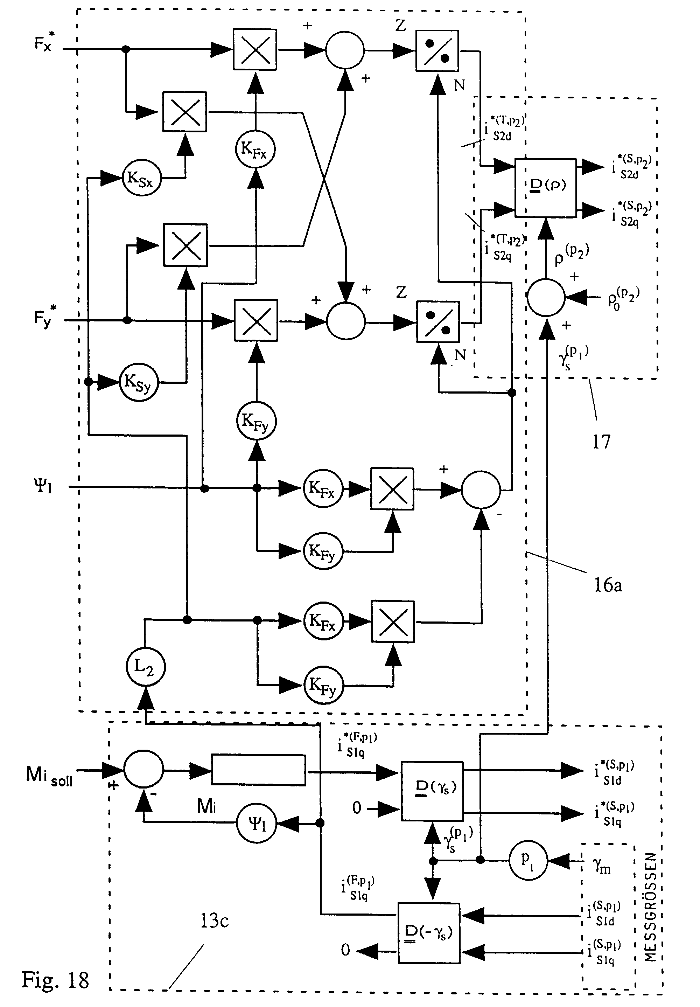

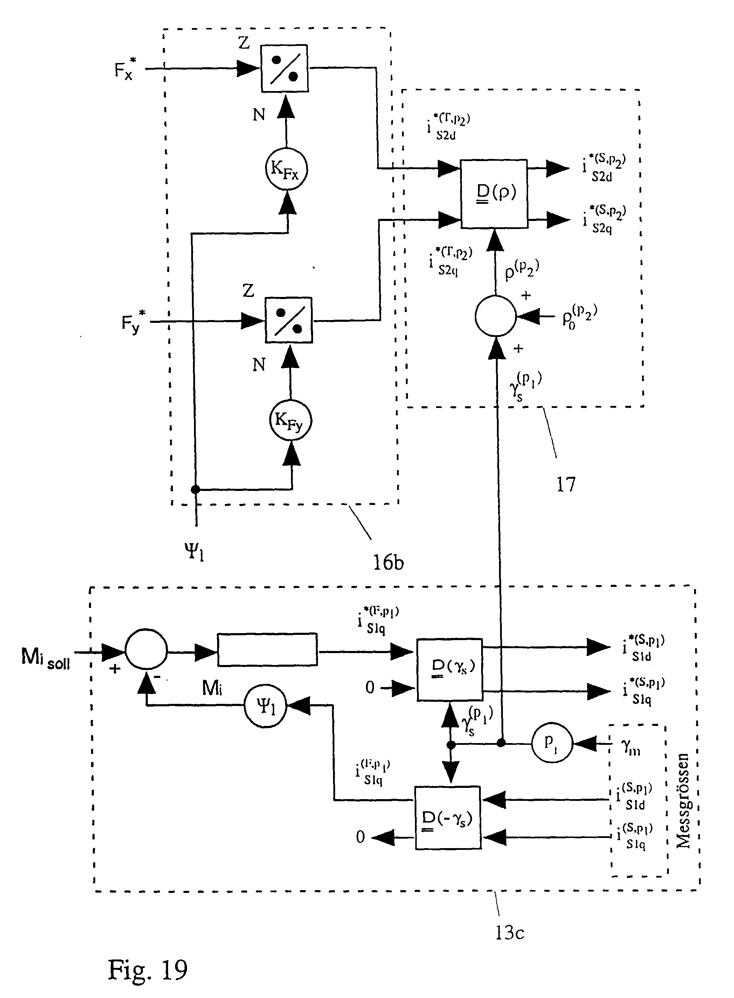

Im Unterschied zu Asynchronmotoren, werden Synchronmotoren normalerweise feldorientiert gesteuert. Da der Fluss bei der Synchronmaschine fest mit dem Rotor verkoppelt ist, kann der Flusswinkel $\gamma_s^{(p_1)}$ ganz einfach aus dem mechanischen Rotorwinkels $\gamma_m$ durch Multiplikation mit pl bestimmt werden. **Figur 18** zeigt das Beispiel der Kombination einer feldorientierten Drehmomentregelung einer Synchronmaschine (**13c**) mit der erfindungsgemässen Querkraftsteuerung mit vollständiger Entkopplung, welche die Lorentz-Störkraft berücksichtigt (**16a**). Bei der Synchronmaschine wird der Antriebsfluss über einen Gleichstrom in der Rotorwicklung oder mit Permanentmagneten auf dem Rotor erzeugt. $\Psi_1$ wird deshalb als Maschinenparameter der Querkraftsteuerung zugeführt. Der Antriebsstrom hat bei der Synchronmaschine nur einen drehmomentbildenden Anteil und entspricht somit direkt $i_{S1q}$. Dieser kann gemessen und ins Flusskoordinatensystem (F) transformiert werden. Die Transformation nach (F) ist gleichwertig mit der Betragsbildung. Der Antriebsstrom $i_{S1q}^{(F,p_1)}$ wird dann sowohl für die Drehmomentregelung als auch für die Querkraftsteuerung verwendet. Der Antriebsflusswinkel wird hier wie gesagt über den mechanischen Rotorwinkel bestimmt. Die feldorientierte Antriebsregelung der Synchronmaschine lässt sich natürlich auch mit der vereinfachten erfindungsgemässen Querkraftsteuerung mit nur teilweiser Entkopplung, welche die Lorentz-Störkraft nicht berücksichtigt (**16b**), kombinieren. Dieses Beispiel ist in **Figur 19** dargestellt. Im Unterschied zu **Figur 18** wird hier $i_{S1q}^{(F,p_1)}$ nicht für die Querkraftsteuerung benötigt. Im übrigen gilt auch hier das zu **Figur 18** gesagte.

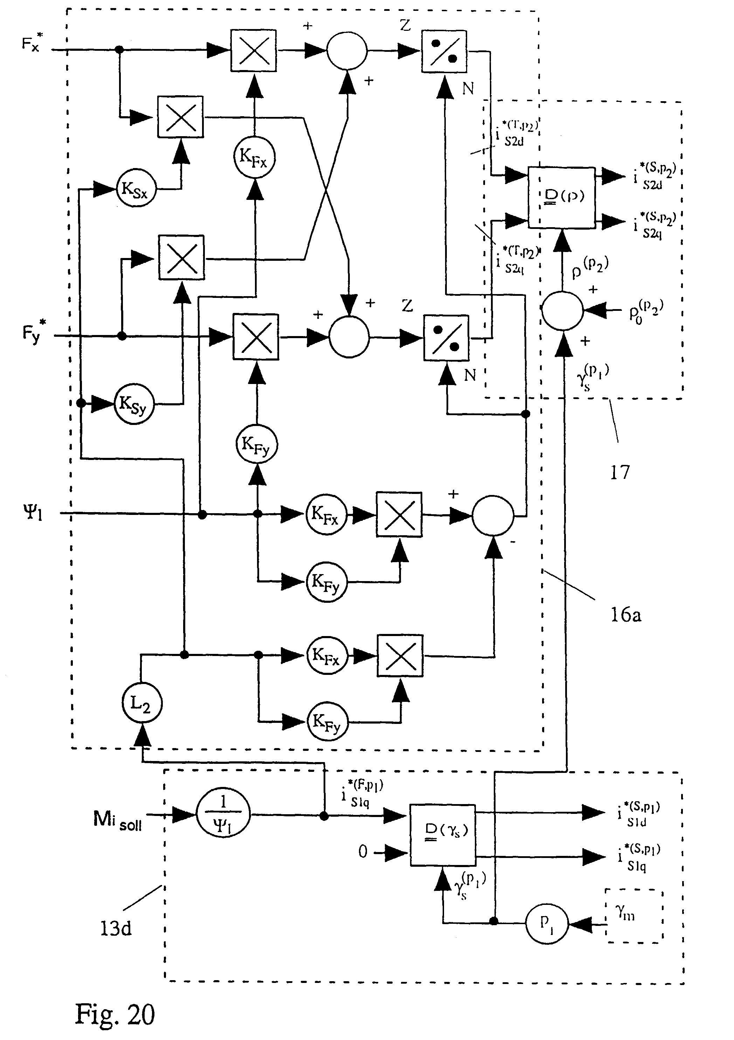

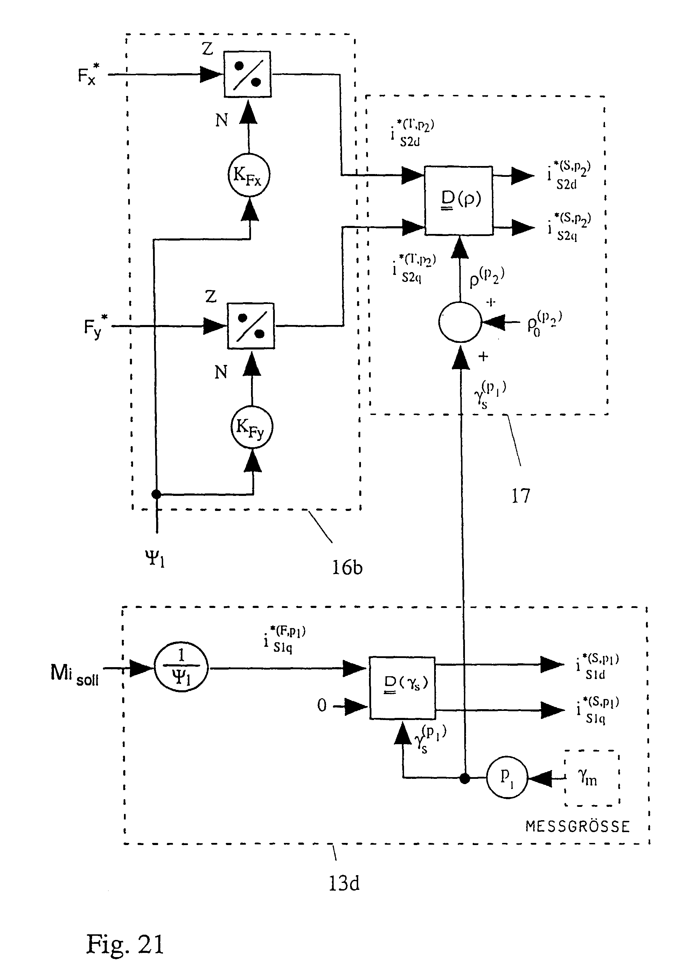

Viel häufiger als die feldorientierte Drehmomentregelung ist die feldorientierte Drehmomentsteuerung der Synchronmaschine, da ja in der Praxis dem Drehmomentregelkreis meistens ein Drehzahlregelkreis überlagert wird. **Figur 20** zeigt das Beispiel der Kombination einer feldorientierten Drehmomentregelung einer Synchronmaschine (**13c**) mit der erfindungsgemässen Querkraftsteuerung mit vollständiger Entkopplung, welche die Lorentz-Störkraft berücksichtigt (**16a**). Der Antriebsstrom wird nun direkt proportional zum Drehmoment und umgekehrt proportional zum Antriebsfluss gesteuert. Dieser Steuerwert wird ebenfalls vom Querkraftsteuerverfahren verwendet. Als Messgrösse wird nur noch der mechanische Rotorwinkel $\gamma_m$ benötigt. Aus diesem wird $\gamma_s^{(p_1)}$ abgeleitet und sowohl der Drehmomentsteuerung als auch der Querkraftsteuerung zugeführt. Die feldorientierte Antriebssteuerung der Synchronmaschine lässt sich natürlich auch mit der vereinfachten erfindungsgemässen Querkraftsteuerung mit nur teilweiser Entkopplung, welche die Lorentz-Störkraft nicht berücksichtigt (**16b**), kombinieren. Dieses Beispiel ist in **Figur 21** dargestellt. Im Unterschied zu **Figur 20** wird hier der Antriebsstrom nicht für die Querkraftsteuerung benötigt. Im übrigen gilt auch hier das zu **Figur 20** gesagte.

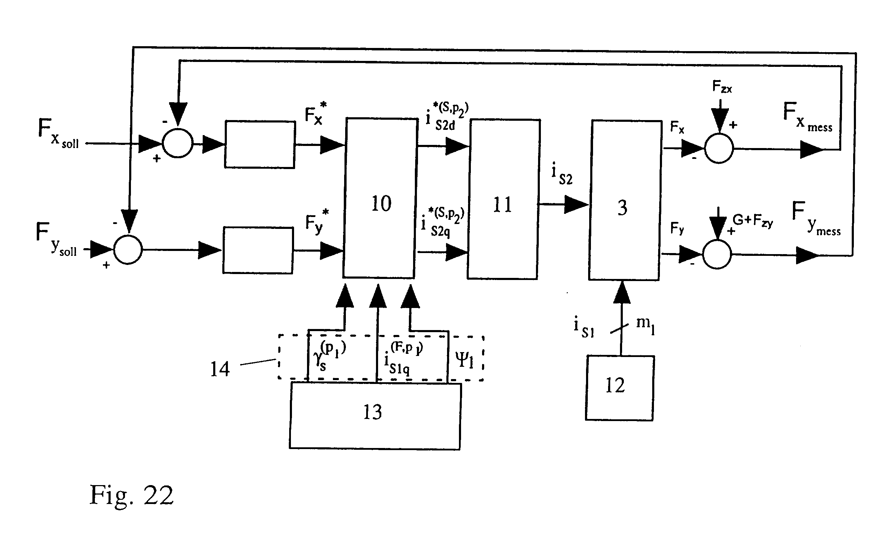

Ist eine sehr genaue Einstellung der auf den Rotor wirkenden Querkraft gefordert, so kann es sinnvoll sein, diese nicht zu steuern, sondern zu regeln. Dazu wird die Querkraft in einer oder in zwei Richtungen mittels Kraftsensoren (Beispielsweise mit an einem Biegebalken oder in einer Qraftmessdose montierten Dehnmessstreifen oder mit piezoelektrischen Sensoren) gemessen. Soll die Querkraft nur in einer Richtung geregelt werden, so wird diese am einfachsten in derselben Richtung gemessen, in der sie geregelt wird. Der Messwert wird vom Sollwert subtrahiert und die so gebildete Regelabweichung einem Eingrössenregler zugeführt. Der Reglerausgang wird in eine x- und y- Komponente zerlegt (falls die Richtung der Sollkraft mit der x- oder y- Achse übereinstimmt, kann auf eine Zerlegung in Komponenten verzichtet werden) und der Querkraftsteuerung nach Anspruch 1 oder 2 ($F_x^*$ und $F_y^*$) zugeführt. Wird die Kraft in zwei Richtungen gemessen (vorzugsweise senkrecht aufeinanderstehend), so kann daraus der ebene Istkraftvektor bestimmt werden. Die beiden Vektorkomponenten ($F_x$ und $F_y$) werden von ihren Sollwerten subtrahiert und die Regelabweichungen zwei unabhängigen Reglern zugeführt. Die Reglerausgänge werden mit den Eingängen ($F_x^*$ und $F_y^*$) der Querkraftsteuerung verbunden. **Figur 22** zeigt das Bockschema der Querkraftregelung.

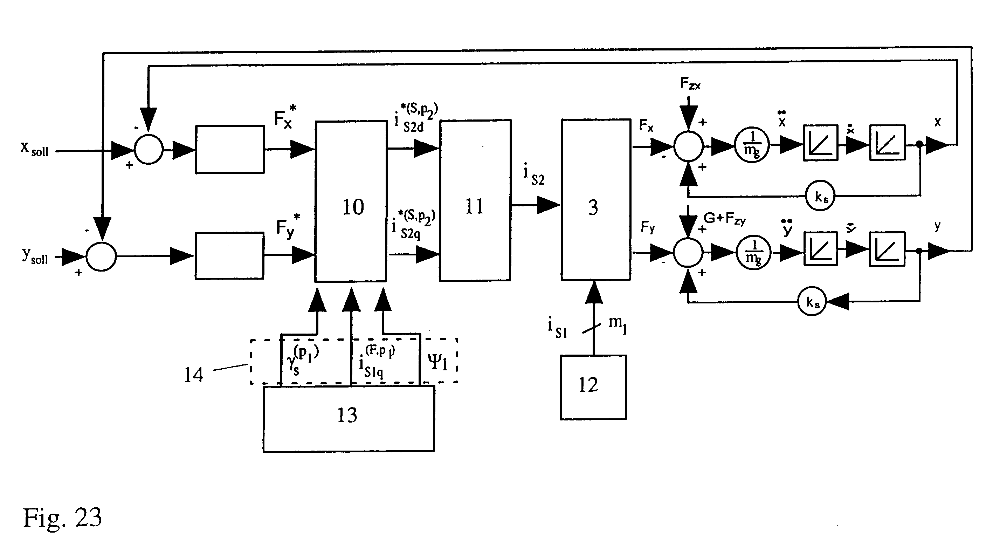

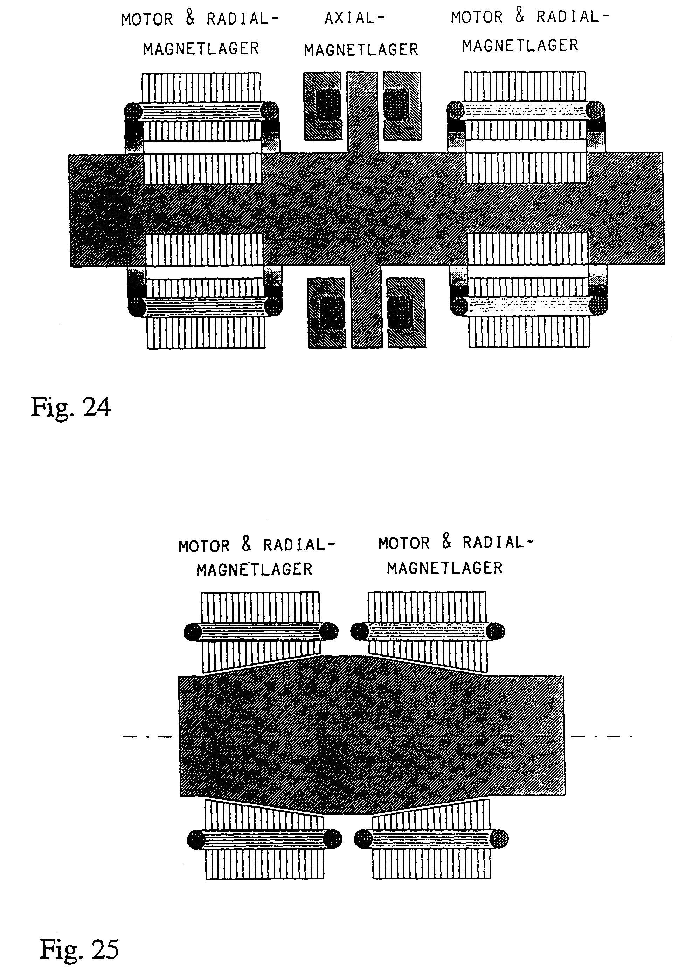

Ist der Rotor in einer oder in mehreren Richtungen (der Querschnittsebene) verschiebbar, so kann mit Hilfe von Querkräften auch seine Lage beeinflusst werden. Wird die Rotorlage mittels Sensoren, oder über einen Beobachter bestimmt, so kann diese geregelt werden. **Figur 23** zeigt das Blockschema einer möglichen Querschubregelung für zwei Achsen. Die Rotorlage (x,y) wird durch Lagesensoren oder über einen Beobachter bestimmt. Bei der Darstellung in **Figur 23** liegt der Koordinatenursprung im Zentrum der Maschine. Die Istlage wird von der Sollage ($x_{soll}$, $y_{soll}$) subtrahiert und die Regeldifferenz einem Regler zugeführt. Die Regelung kann wie in Figur 23 dargestellt am einfachsten komponentenweise erfolgen. Als Regler kommen zum Beispiel PD-Regler, PID-Regler oder Zustandsregler mit Zustandsbeobachter in Frage. Der Reglerausgang wird mit dem Eingang ($F_x^*$ und $F_y^*$) der Querkraftsteuerung (**10**) verbunden. Das Stromsteuergerät (**11**) steuert dann in bekannter Weise die Drehfeldmaschine mit Spezialwicklung (**3**) nach **Figur 9** oder **10**. Der in (**3**) nicht dargestellte Zusammenhang zwischen Querkraft und Rotorlage (Doppelintegrator) und der aufgrund einer Verlagerung des Rotors aus dem Zentrum wirkende magnetische Zug (positive Rückführung) sind in **Figur 23** extern ergänzt worden. Mit der beschriebenen Querschubregelung lassen sich zwei Freiheitsgrade des Rotors regeln. Als Anwendungsbeispiel ist die Realisierung eines Radialmagnetlagers in der Drehfeldmaschine denkbar. Zwei solche Drehfeldmaschinen mit Querschubregelung können zu einer "lagerlosen Maschine" kombiniert werden, das heisst zu einer Maschine bei der über die Antriebswicklungen ein Drehmoment und über die beiden Steuerwicklungen magnetische Radiallagerkräfte erzeugt werden. Die axiale Position des Rotors kann über ein zusätzliches Axialmagnetlager oder über eine konische Formgebung des Rotors stabilisiert werden. Der prinzipielle Aufbau einer solchen "lagerlosen" Drehfeldmaschine ist in **Figur 24** abgebildet. Werden die beiden Teilmaschinen wie in **Figur 25** gezeichnet mit konischen Rotoren ausgerüstet, so kann über die Antriebsflussverteilung zwischen den beiden Teilmaschinen ebenfalls die Axiallage bestimmt werden. Aufgrund der selben Lagerkraftwirkung besitzt ein solcher lagerlose Motor prinzipiell die gleichen Eigenschaften wie der konventionell aktiv magnetisch gelagerte Antrieb. Diese ergeben sich aus der Berührungsfreiheit der Lagerung und der Möglichkeit zu Stelleingriffen über die Regelung. So ist die magnetische Lagerung verschleiss-, wartungs-, und schmiermittelfrei. Die maximal zulässige Drehzahl wird nur durch die Fliehkraftbeanspruchung des Rotors begrenzt. Über die Regelung kann die Lagercharakteristik, das heisst die Steifigkeit und die Dämpfung, während des Betriebs eingestellt und an sich ändernde Bedingungen angepasst werden. Eine Kompensation von Unwuchtkräften ist ebenso denkbar wie die aktive Dämpfung von Biegeschwingungen des Rotors. Mit einem Integralanteil des Reglers lässt sich stationär eine unendlich grosse Steifigkeit erreichen. Innerhalb der Grenzen des Luftspalts kann die Position wie auch der Neigungswinkel des Rotors während des Betriebs eingestellt und verändert werden.

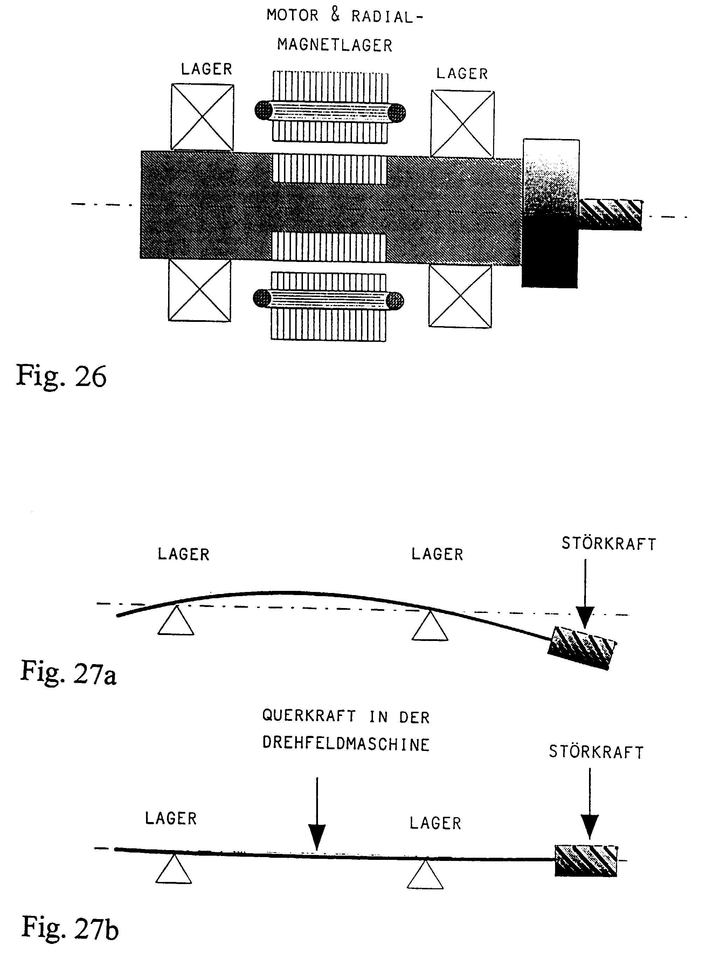

Die lagerlose Maschine eröffnet aber noch weitere Vorteile. Da die magnetischen Querkräfte über den ganzen Rotor verteilt angreifen und nicht nur an den beiden Enden wie bei der konventionellen Lagerung, steht ein effizientes Mittel zur Beeinflussung der Rotordynamik zur Verfügung. Auch sind die erreichbaren Lagerkräfte sehr gross, da die gesamte Oberfläche des Maschinenrotors für die Kraftbildung zur Verfügung steht. Ganz neue Perspektiven eröffnen sich in der Kombination konventionell gelagerter Maschinen (Kugellager, Luftlager, Magnetlager, hydrostatische und hydrodynamische Lager) mit einem lagerlosen Motor. Eine solche Maschine ist schematisch in **Figur 26** dargestellt. Durch die Möglichkeit, auf den Rotor wirkende Querkräfte mit beliebiger Richtung und Amplitude dynamisch einstellen zu können, ergeben sich neue Lösungsansätze zur Dämpfung von Rotorschwingungen, zur Beeinflussung der Lagercharakteristik, zur Entlastung der konventionellen Lager oder zur Beeinflussung der Durchbiegung des Rotors. Letztere Anwendung ist schematisch in **Figur 27** dargestellt.

| Bezugszeichenliste | |
|---|---|
| 1 | Antriebswicklungsgrösse (Indizes) |
| 2 | Steuerwicklungsgrösse (Indizes) |
| 3 | Drehfeldmaschine mit einer $p_1$-polpaarigen Antriebswicklung und einer $(p_2 = p_1 \pm 1)$-polpaarigen Steuerwicklung |
| 3a | Asynchronmaschine zur Querkraft- und Drehmomentbildung |
| 3b | Synchronmaschine zur Querkraft- und Drehmomentbildung |
| 4 | Steuerwicklung |
| 5 | Antriebswicklung |
| 6 | Rotor |
| 7 | Flussmesssonden |
| 9 | Steuergerät |
| 10 | Steuerstromberechnung |
| 10a | Steuerstromberechnung mit vollständiger Entkopplung |
| 10b | Steuerstromberechnung mit teilweiser Entkopplung |
| 11 | Stromspeisegerät für Steuerwicklung |
| 12 | zweite Mittel |
| 13 | Flussberechnung- und Transformation |
| 14 | Antriebsgrössen |
| 15 | erste Mittel |
| 16a | vollständige Entkopplung |
| 16b | teilweise Entkopplung |
| 17 | Koordinatentransformation $(T{\rightarrow}S)$ |
| d | Direkt-Komponente (dq-Darstellung) |
| $\underline{F}$ | Querkraftvektor |
| $F_x$ | x-Komponente des Querkraftvektors |
| $F_y$ | y-Komponente des Querkraftvektors |
| $(F)$ | Antriebsflussorientiertes Koordinatensystem Beispiel: $i_{S1q}^{(F,p_1)}$ bezeichnet die Quer-Komponente des Antriebsstromvektors in Antriebsflusskoordinaten in der $p_1$-Ebene dargestellt |
| $K_L$ | Lorentz-Nutzkraftraftkonstante: für Synchronmaschine $K_L = \frac{mp_1w_2}{2rw_1}$, für Asynchronmaschine $K_L = 0$ |
| $K_M$ | Maxwell-Kraftkonstante: $K_M = \frac{\pi p_1 p_2 L_2}{4lr\mu_0 w_1 w_2}$ |
| $K_S$ | Lorentz-Störkraftkonstante $K_S = \frac{mp_2 w_1}{2rw_2}$ |
| $K_{Fx}$ | Kraftkonstante in x-Richtung |
| $K_{Fy}$ | Kraftkonstante in y-Richtung |
| $K_{Sx}$ | Störkraftkonstante in x-Richtung |
| $K_{Sy}$ | Störkraftkonstante in y-Richtung |
| $\underline{i}_{S1}^{(p_1)}$ | Antriebsstromvektor in der $p_1$-Ebene dargestellt |
| $i_{S1d}^{(p_1)}$ | Direkt-Komponente des Antriebsstromvektor in der $p_1$-Ebene dargestellt |
| $i_{S1q}^{(p_1)}$ | Quer-Komponente des Antriebsstromvektors in der $p_1$-Ebene dargestellt |
| $\underline{i}_{S2}^{(p_2)}$ | Steuerstromvektor in der $p_2$-Eben dargestellt |
| $i_{S2d}^{(p_2)}$ | Direkt-Komponente des Steuerstromvektors in der $p_2$-Ebene dargestellt |

(fortgesetzt)

| Bezugszeichenliste | |
| --- | --- |
| $i_{S2q}^{(p_2)}$ | Quer-Komponente des Steuerstromvektors in der $p_2$-Ebene dargestellt |
| l | Länge des Rotors |
| $L_1$ | Hauptinduktivität der Antriebswicklung |
| $L_1$ | Hauptinduktivität der Steuerwicklung |
| m | Phasenzahl, Strangzahl |
| $m_g$ | Masse des Rotors |
| M | Drehmoment |
| $M_i$ | inneres Maschinendrehmoment |
| $M_L$ | Lastdrehmoment |
| p | Polpaarzahl |
| $p_1$ | Polpaarzahl der Antriebswicklung |
| $p_2$ | Polpaarzahl der Steuerwicklung |
| $(p_1)$ | Abbildungsebene mit der Poplaarzahl $p_1$ |
| $(p_2)$ | Abbildungsebene mit der Poplaarzahl $p_2$ |
| q | Quer-Komponente (dq-Darstellung) |
| R | Rotor |
| r | Radius des Rotors |
| S | Stator |
| (S) | Statororientiertes Koordinatensystem |
| | Beispiel: $\underline{i}_{S2}^{(S,p_2)}$ bezeichnet den Steuerstromvektor in Statorkoordinaten, in der $p_1$-Ebene dargestellt |
| (T) | mit dem Winkel p umlaufendes Koordinatensystem |
| | Beispiel: $\underline{i}_{S2}^{(T,p_2)}$ bezeichnet den Steuerstromvektor in einem mit dem Winkel $\rho^{(p_2)}$ umlaufenden Koordinatensystem, in der $p_1$-Ebene dargestellt |
| $w_1$ | Windungszahl der Antriebswicklung |
| $w_2$ | Windungszahl der Steuerwicklung |
| X,Y | Achsen des geometrischen Koominatensystems (Indizes) |
| x,y | Auslenkung des Rotors in x,y-Richtung |
| * | Sollgrössen, Steuergrössen |
| | Beispiel: $\underline{i}_{S2}^{*(S,p_2)}$ bezeichnet den Sollwert des Steuerstromvektors in Statorkoordinaten, in der $p_1$-Ebene dargestellt |
| $\alpha_0$ | Verdrehung der d-Achse der Antriebswicklung gegenüber der x-Achse des geometrischen Koordinatensystems |
| $\alpha_{1,2}$ | Verdrehung der d-Achsen von Antriebs- und Steuerwicklung |
| $\gamma_m$ | mechanischer Rotorwinkel |
| $\gamma_s^{(p_1)}$ | Argument des Antriebsflussvektors, in der $p_1$-Ebene dargestellt |
| $\mu_o$ | magnetische Feldkonstannte im Vakuum |
| $\pi$ | Kreiskonstannte |
| $\Psi_1$ | Betrag des Antriebsflusses |
| $\underline{\Psi}_1^{(p_1)}$ | Antriebsflussvektor in der $p_1$-Ebene dargestellt |
| $\rho^{(p2)}$ | Verdrehung des zur Berechnung des Steuerstromsollvektors verwendeten Koordinatensystems (T) gegenüber dem Statorkoordinatensystem in der $p_2$-Ebene gemessen |
| $\rho_0^{(p_2)}$ | Zeitinvarianter Anteil von $\rho^{(p2)}$ |
| $\omega_m$ | mechanische Drehfrequenz |
| $\omega_R$ | Rotor-Drehfrequenz (Schlupffrequenz) |

**Patentansprüche**

1. Verfahren zur Steuerung einer Drehfeldmaschine mit Ständerwicklung zur kombinierten Erzeugung eines Drehmoments und einer Querkraft F, welche senkrecht auf den Rotor wirkt und in Betrag und Richtung beliebig eingestellt werden kann, wobei

a) die Ständerwicklung eine Antriebswicklung mit der Polpaarzahl $p_1$ und eine Steuerwicklung mit der Pol-paarzahl $p_2 = p_1 \pm 1$ umfasst,
b) die Steuerwicklung mit einem Steuerstrom $i_{S2}$ unabhängig vom Antriebsstrom $i_{S1}$ der Antriebswicklung gespeist wird,

**dadurch gekennzeichnet,**

- dass das in der $p_1$-Ebene dargestellte Argument des Antriebsflusses $\gamma^{(p_1)}$ bestimmt wird,
- der für eine gewünschte Querkraft F* notwendige, in der $p_2$-Ebene betrachtete Steuerstrom $i_{S2}^{*(T,p_2)}$ in einem mit dem Winkel $\gamma^{(p_1)}$ umlaufenden Koordinatensystem (T) bestimmt wird,
- dieser Steuerstrom $i_{S2}^{s*(T,p_2)}$ durch eine Koordinatendrehung um den Winkel $\rho^{(p_2)} = \rho_0^{(p_2)} + \gamma^{(p_1)}$ in ein ständer-festes Koordinatensystem (S) transformiert wird, wobei durch den konstanten Winkel $\rho_0^{(p_2)s}$ eine allfällige Ver-drehung der Steuerwicklung und der Antriebswicklung im Ständer berücksichtigt wird.

2. Verfahren nach Anspruch 1,
   **dadurch gekennzeichnet,**

- dass der Steuerstrom $i_{S2}^{*(T,p_2)}$ im Koordinatensystem (T) als Vektor

$$\underline{i}_{S2}^{*(T,p_2)} = \begin{pmatrix} i_{S2d}^{*(T,p_2)} \\ i_{S2q}^{*(T,p_2)} \end{pmatrix}$$

komponentenweise und nach der Vorschrift

$$i_{S2d}^{*(T,p_2)} = \frac{F_x^* K_{Fy}\Psi_1 + F_y^* K_{Sx}L_2 i_{S1q}^{(F,p_1)}}{K_{Fx}K_{Fy}\Psi_1^2 - K_{Sx}K_{Sy}L_2^2 i_{S1q}^{2,(F,p_1)}} \; , \; i_{S2d}^{*(T,p_2)} = \frac{F_y^* K_{Fx}\Psi_1 + F_x^* K_{Sy}L_2 i_{S1q}^{(F,p_1)}}{K_{Fx}K_{Fy}\Psi_1^2 - K_{Sx}K_{Sy}L_2^2 i_{S1q}^{2,(F,p_1)}}$$

mit

i) dem gewünschten Kraftvektor

$$\underline{F}^* = \begin{pmatrix} F_x^* \\ F_y^* \end{pmatrix} ,$$

ii) der in Flusskoordinaten in der $p_1$-Ebene betrachteten, momentbildenden Antriebsstromkomponente $i_{S1q}^{(F,p_1)}$
iii) dem Antriebsflussbetrag $\Psi_1$ und
iiii) den Maschinenparametern $L_2$, $K_{Fx}$, $K_{Fy}$, $K_{Sx}$, und $K_{Sy}$ .bestimmt wird.

3. Verfahren nach Anspruch 1,
   **dadurch gekennzeichnet,**

- dass der Steuerstrom $i_{S2}^{*(T,p_2)}$ im Koordinatensystem (T) als Vektor

$$\underline{i}_{S2}^{*(T,p_2)} = \begin{pmatrix} i_{S2d}^{*(T,p_2)} \\ i_{S2q}^{*(T,p_2)} \end{pmatrix}$$

komponentenweise und nach der vereinfachten Vorschrift

$$i_{S2d}^{*(T,p_2)} = \frac{F_x^*}{K_{Fx} \Psi_1} , \; i_{S2q}^{*(T,p_2)} = \frac{F_y^*}{K_{Fy} \Psi_1}$$

mit

      i) dem gewünschten Kraftvektor

$$\underline{F}^* = \begin{pmatrix} F_x^* \\ F_y^* \end{pmatrix} ,$$

      ii) dem Antriebsflussbetrag $\Psi_1$ und
      iii) den Maschinenparametern $K_{Fx}$ und $K_{Fy}$ bestimmt wird.

**4.** Verfahren nach einem der vorangehenden Ansprüche,
**dadurch gekennzeichnet,**

-   dass der erfindungsgemässen Querkraftvektorsteuerung eine Querkraftvektorregelung überlagert ist, wobei der Istwert des Querkraftvektors durch Kraftsensoren direkt messtechnisch erfasst oder über eine Einrichtung zur Parameteridentifikation wie einen Zustandsbeobachter aus anderen Messgrössen bestimmt und anschliessend mit dem Sollwert verglichen wird, die so gewonnene Regelabweichung einem Regler zugeführt wird und der Reglerausgang mit dem Steuereingang des erfindungsgemässen Verfahrens zur Querkraftsteuerung verbunden wird.

**5.** Verfahren nach einem der vorangehenden Ansprüche,
**dadurch gekennzeichnet,**

-   dass der erfindungsgemässen Querkraftvektorsteuerung eine Regelung der Rotorlage überlagert ist, wobei der Istwert der Lage (in x- und y-Richtung) durch Distanzsensoren direkt messtechnisch erfasst oder über eine Einrichtung zur Parameteridentifikation wie einen Zustandsbeobachter aus anderen Messgrössen bestimmt und anschliessend mit dem Sollwert verglichen (in x- und y-Richtung) wird, die so gewonnene Regelabweichung (in x- und y-Richtung) einem Regler zugeführt wird und der Reglerausgang mit dem Steuereingang des erfindungsgemässen Verfahrens zur Querkraftsteuerung verbunden wird.

**6.** Verfahren nach einem der vorangehenden Ansprüche,
**dadurch gekennzeichnet,**

-   dass die Grössen Antriebsflussbetrag $\Psi_1$, Antriebsflussargument $\gamma_s^{(p_1)}$ und momentbildender Antriebsstrom $i_{S1q}^{(p_1)}$ mit Hilfe von Maschinengleichungen aus Messgrössen und/oder beobachteten Grössen und/oder entsprechenden Sollwerten berechnet werden oder dass die Grössen Antriebsflussbetrag $\Psi_1$ und das Antriebsflussargument $\gamma_s^{(p_1)}$ über Flussmessung oder Teilflussmessung bestimmt werden.

**7.** Verfahren nach einem der vorangehenden Ansprüche,
**dadurch gekennzeichnet,**

-   dass mit Hilfe der erfindungsgemässen Querkraftvektorsteuerung auf den Rotor Kräfte ausgeübt werden, über welche die Durchbiegung des Rotors statisch und/oder dynamisch beeinflusst wird.

**8.** Verfahren nach einem der vorangehenden Ansprüche,
**dadurch gekennzeichnet,**

- dass mit Hilfe der erfindungsgemässen Querkraftvektorsteuerung auf den Rotor Kräfte ausgeübt werden, über welche Eigenschwingungen des Rotors passiv und/oder aktiv bedämpft, angeregt oder in irgend einer Weise beeinflusst werden.

**9.** Vorrichtung zur Steuerung einer Drehfeldmaschine mit Ständerwicklung zur kombinierten Erzeugung eines Drehmoments und einer Querkraft F, welche senkrecht auf den Rotor wirkt und in Betrag und Richtung beliebig eingestellt werden kann, wobei die Ständerwicklung eine Antriebswicklung mit der Polpaarzahl $p_1$ und eine Steuerwicklung mit der Polpaarzahl $p_2 = p_1 \pm 1$ umfasst, die Steuerwicklung mit einem Steuerstrom $i_{S2}$ unabhängig vom Antriebstrom $i_{S1}$ der Antriebswicklung gespeist wird, dadurch gekennzeichnet,

- dass ein Stromspeisemodul (11) zur Speisung der Steuerwicklung und eine Speisemodul (12) zur Speisung der Antriebswicklung vorgesehen ist,
ein Signalverarbeitungsmodul (15) vorgesehen ist, in welchem

  i) aufgrund von Messgrössen und/oder Steuergrössen das in der $p_1$-Ebene dargestellte Argument des Antriebsflusses $\gamma_s^{(p_1)}$, der Betrag des Antriebsflusses $\Psi_1$ und eventuell die in der $p_1$-Ebene dargestellte Quer-Komponente des Antriebsstromvektors $i_{S1q}^{(p_1)}$ bestimmt werden, und
  ii) daraus der in der $p_2$-Ebene dargestellte Steuerstromsollwert $i_{S2}^{*(p_2)}$ bestimmt wird, sowie

  der derart bestimmte Steuerstrom $i_{S2}^{*(p_2)}$ als Sollwert des Stromspeisemoduls (11) der Steuerwicklung dient.

**10.** Vorrichtung (9) nach Anspruch 9,
**dadurch gekennzeichnet,**

- dass das Speisemodul (12) der Antriebswicklung eine Steuervorrichtung umfasst, durch welche das Drehmoment oder die Drehzahl sowie der Antriebsfluss der Maschine beliebig eingestellt werden können.

**11.** Vorrichtung (9) nach Anspruch 10,
**dadurch gekennzeichnet,**

- dass die Steuervorrichtung entweder nach dem Kennliniensteuerverfahren, oder nach einem feldorientierten Steuer- oder Regelverfahren arbeitet.

**12.** Vorrichtung (9) nach einem der Ansprüche 9 bis 11,
**dadurch gekennzeichnet,**

- dass zusätzliche Mittel zur Querkraftvektorregelung vorhanden sind, welche Mittel umfassen:

  - Kraftsensoren oder einen Zustandsbeobachter zur Bestimmung des Querkraft-Istwertes und
  - einen Regler zur Regelung der Querkraft.

**13.** Vorrichtung (9) nach einem der Ansprüche 9 bis 12,
**dadurch gekennzeichnet,**

- dass zusätzliche Mittel zur Querkraftvektorregelung vorhanden sind, welche Mittel umfassen:

  - Lagesensoren oder einen Zustandsbeobachter zur Bestimmung der Rotorlage und
  - einen Regler zur Regelung der Rotorlage.

**14.** Vorrichtung nach einem der Ansprüche 9 bis 13,
**dadurch gekennzeichnet,**

- dass zusätzliche Mittel zur Steuerung oder zur Regelung der Durchbiegung des Rotors vorhanden sind, welche Mittel umfassen:

- Lagesensoren oder einen Zustandsbeobachter zur Bestimmung der Durchbiegung des Rotors und
- einen Regler zur Regelung der Durchbiegung des Rotors.

15. Vorrichtung nach einem der Ansprüche 9 bis 14,
**dadurch gekennzeichnet,**

- dass zusätzliche Mittel zur Bedämpfung von Eigenschwingungen des Rotors vorhanden sind, welche Mittel umfassen:

- Sensoren oder einen Zustandsbeobachter zur Bestimmung von Schwingungen des Rotors und
- einen Regler zur Ausregelung der Rotorschwingungen.

## Claims

1. Method for the control of an AC-machine with a stator winding for the combined generation of a torque and a transverse force F, which acts perpendicular to the rotor and the magnitude and direction of which can be adjusted as desired, wherein

   a) the stator winding includes a drive winding with the pole pair number $p_1$ and a control winding with the pole pair number $p_2 = p_1 \pm 1$

   b) the control winding is supplied with a control current $i_{S2}$ independently of the drive current $i_{S1}$ of the drive winding,

   characterised in that

   - the argument of the drive flux $\gamma_s^{(p1)}$ in the $p_1$ plane is determined,

   - the control current $i_{S2}^{*(T,p2)}$ considered in the $p_2$ plane and necessary for a desired transverse force F* is determined in a coordinate system (T) rotating with the angle $\gamma_s^{(p1)}$,

   - this control current $i_{S2}^{*(T,p2)}$ is transformed by a coordinate rotation through the angle $\rho^{(p2)} = \rho_0^{(p2)} + \gamma_s^{(p1)}$ into a coordinate system (S) fixed to the stator, wherein any relative rotation of the control winding and of the drive winding in the stator is taken account of by the constant angle $\rho_0^{(p2)}$.

2. Method in accordance with claim 1, characterised in that the control current $i_{S2}^{*(T,p2)}$ in the coordinate system (T) is determined component-wise as the vector

$$\underline{i}_{S2}^{*(T,p2)} = \begin{pmatrix} i_{S2d}^{*(T,p_2)} \\ i_{S2q}^{*(T,p_2)} \end{pmatrix}$$

in accordance with the relationship

$$i_{S2d}^{*(T,p_2)} = \frac{F_x^* K_{Fy}\psi_1 + F_y^* K_{Sx}L_2 i_{S1q}^{(F,p_1)}}{K_{Fx}K_{Fy}\psi_1^2 - K_{Sx}K_{Sy}L_2^2 i_{S1q}^{2\,(F,p_1)}} \,,\quad i_{S2q}^{*(T,p_2)} = \frac{F_y^* K_{Fx}\psi_1 + F_x^* K_{Sy}L_2 i_{S1q}^{(F,p_1)}}{K_{Fx}K_{Fy}\psi_1^2 - K_{Sx}K_{Sy}L_2^2 i_{S1q}^{2\,(F,p_1)}}$$

   with

   i) the desired force vector

$$\underline{F}^{\star} = \begin{pmatrix} F_x^{\star} \\ F_y^{\star} \end{pmatrix},$$

ii) the torque-forming drive current component $i_{S1q}^{(F,p1)}$ considered in flux coordinates in the $p_1$ plane,

iii) the magnitude $\psi_1$ of the drive flux and

iiii) the machine parameters $L_2$, $K_{Fx}$, $K_{Fy}$, $K_{Sx}$, and $K_{Sy}$ being determined.

3. Method in accordance with claim 1, characterised in that the control current $i_{S2}^{\star(T,p2)}$ is determined component-wise in the coordinate system (T) as the vector

$$i_{S2}^{\star(T,p_2)} = \begin{pmatrix} i_{S2d}^{\star(T,p_2)} \\ i_{S2q}^{\star(T,p_2)} \end{pmatrix}$$

in accordance with the simplified relationship

$$i_{S2d}^{\star(T,p_2)} = \frac{F_x^{\star}}{K_{Fx}\Psi_1} , \; i_{S2q}^{\star(T,p_2)} = \frac{F_y^{\star}}{K_{Fy}\Psi_1},$$

with

i) the desired force vector

$$\underline{F}^{\star} = \begin{pmatrix} F_x^{\star} \\ F_y^{\star} \end{pmatrix},$$

ii) the magnitude $\psi_1$ of the drive flux, and

iii) the machine parameters $K_{Fx}$ and $K_{Fy}$ being determined.

4. Method in accordance with one of the preceding claims, characterised in that a transverse force vector regulation is superimposed on the transverse force vector control of the invention, with the actual value of the transverse force vector being directly measured by force sensors or determined from other measurement parameters via a means for parameter identification, such as a status observer, and subsequently being compared with the desired value, with the so obtained control deviation being supplied to a controller and with the controller output being connected to the control input of the method of the invention for the transverse force control.

5. Method in accordance with one of the preceding claims, characterised in that a regulation of the rotor position is superimposed on the transverse force vector control of the invention, with the actual value of the position (in the x-direction and in the y-direction) being directly measured by distance sensors or being determined from other measured parameters via a means for parameter identification, such as a status observer, and subsequently being compared with the desired value (in the x-direction and in the y-direction), with the so obtained control deviation (in the x-direction and in the y-direction) being supplied to a regulator and with the regulator output being connected to the control input of the method of the invention for the transverse force control.

6. Method in accordance with one of the preceding claims, characterised in that the parameters magnitude $\psi_1$ of the

drive flux, argument $\gamma_s^{(p1)}$ of the drive flux and the torque-forming drive current $i_{S1q}^{(p1)}$ are computed with the aid of machine equations from measurement parameters and/or from observed parameters and/or corresponding desired values or in that the parameters magnitude $\psi_1$ of the drive flux and argument $\gamma_s^{(p1)}$ of the drive flux are determined by flux measurement or partial flux measurement.

7. Method in accordance with one of the preceding claims, characterised in that, with the aid of the transverse force vector control of the invention, forces are exerted on the rotor via which the bending deflection of the rotor is statically and/or dynamically influenced.

8. Method in accordance with one of the preceding claims, characterised in that, with the aid of the transverse force vector control of the invention, forces are exerted on the rotor via which natural self oscillations of the rotor are passively and/or actively damped, excited or influenced in some other manner.

9. Apparatus for the control of an AC-machine with stator winding for the combined generation of a torque and a transverse force F which acts perpendicular to the rotor and the magnitude and direction of which can be adjusted as desired, wherein the stator winding includes a drive winding with the pole pair number $p_1$ and a control winding with the pole pair number $p_2 = p_1 \pm 1$ and the control winding is supplied with a control current $i_{S2}$ independently of the drive current $i_{S1}$ of the drive winding, characterised in that a current supply module (11) is provided for supplying the control winding and a supply module (12) is provided for supplying the drive winding, in that a signal processing module (15) is provided in which

i) the argument of the drive flux $\gamma_s^{(p1)}$, represented in the p1 plane, the magnitude of the drive flux $\psi_1$, and possibly the transverse component of the drive current vector $i_{S1q}^{(p1)}$ represented in the $p_1$ plane are determined on the basis of measurement parameters and/or control parameters, and

ii) the desired value for the control current $i_{S2}^{*(p2)}$ represented in the $p_2$ plane is determined from this, and also in that the control current $i_{S2}^{*(p2)}$ determined in this way serves as the desired value of the current supply module (11) for the control winding.

10. Apparatus (9) in accordance with claim 9, characterised in that the supply module (12) for the drive winding includes a control apparatus by which the torque or the speed of rotation and also the drive flux of the machine can be adjusted as desired.

11. Apparatus (9) in accordance with claim 10, characterised in that the control apparatus operates either in accordance with the characteristic control method or in accordance with a field oriented control or regulation method.

12. Apparatus (9) in accordance with one of the claims 9 to 11, characterised in that, additional means for transverse force vector control are present which means include:

- force sensors or a status observer for determining the actual value of the transverse force and

- a controller for regulating the transverse force.

13. Apparatus (9) in accordance with one of the claims 9 to 12, characterised in that additional means are present for the transverse force vector regulation, which means include:

- position sensors or a status observer for determining the rotor position, and

- a controller for regulating the rotor position.

14. Apparatus (9) in accordance with one of the claims 9 to 13, characterised in that additional means are present for the control or for the regulation of the bending deflection of the rotor, which means include:

- position sensors or a status observer for determining the bending deflection of the rotor, and

- a controller for regulating the bending deflection of the rotor.

15. Apparatus (9) in accordance with one of the claims 9 to 14, characterised in that additional means are present for damping natural oscillations of the rotor, which means include:

- sensors or a status observer for determining oscillations of the rotor, and

- a controller for regulating out the rotor oscillations.


**Revendications**

1. Procédé de commande d'une machine à champ tournant, présentant un enroulement stator pour effectuer une génération combinée d'un couple et d'une force transversale F, agissant perpendiculairement sur le rotor et pouvant être réglée à volonté quant à sa valeur et sa direction, où

   a) l'enroulement stator comprend un enroulement d'entraînement ayant un nombre de paires de pôles $p_1$ et un enroulement de commande ayant un nombre de paires de pôles $p_2 = p_1 \pm 1$,
   b) l'enroulement de commande est alimenté avec un courant de commande $i_{S2}$, indépendamment du courant d'entraînement $i_{S_1}$ de l'enroulement d'entraînement,

   caractérisé en ce que,

   - l'argument, représenté dans le plan $p_1$, du flux d'entraînement $\gamma_S(p_1)$ est déterminé,
   - le courant de commande $i_{S2}^{*(T,p_2)}$, nécessaire pour l'obtention d'une force transversale F* souhaitée et considérée dans le plan $p_2$, est déterminé dans un système de coordonnées (T) tournant de l'angle $\gamma_S{}^{(p_1)}$,
   - ce courant de commande $i_{S2}^{*(T,p_2)}$ étant transformé, par une rotation de coordonnées, de la valeur de l'angle $\rho^{(p2)} = \rho_0{}^{(p2)} + \gamma_s{}^{(p1)}$, en un système de coordonnées (S) fixe par rapport au stator, où, du fait que l'angle $\rho_0{}^{(p2)}$ est constant, une rotation éventuelle l'enroulement de commande et de l'enroulement d'entraînement est pris en compte dans le stator.

2. Procédé selon la revendication 1,
   caractérisé en ce que,

   - le courant de commande $i_{S2}^{*(T,p_2)}$ que l'on a dans le système de coordonnées (T) est déterminé sous forme de vecteur

$$
i_{S2}^{*(T,p_2)} = \begin{pmatrix} i_{S2d}^{*(T,p_2)} \\ i_{S2q}^{*(T,p_2)} \end{pmatrix}
$$

en mode composant et selon la prescription :

$$
i_{S2d}^{*(T,p_2)} = \frac{F_x^* K_{Fy}\psi_1 + F_y^* K_{Sx}L_2 i_{S1q}^{(F,p_1)}}{K_{Fx}K_{Fy}\psi_1^2 - K_{Sx}K_{Sy}L_2^2 i_{S1q}^{*(F,p_1)^2}}
$$

$$
i_{S2q}^{*(T,p_2)} = \frac{F_y^* K_{Fx}\psi_1 + F_x^* K_{Sy}L_2 i_{S1q}^{(F,p_1)}}{K_{Fx}K_{Fy}\psi_1^2 - K_{Sx}K_{Sy}L_2^2 i_{S1q}^{(F,p_1)^2}}
$$

avec

   i) le vecteur de force souhaité

$$\underline{F}^{\star} = \begin{pmatrix} F_x^{\star} \\ F_y^{\star} \end{pmatrix} ,$$

ii) la composante de courant d'entraînement $i_{S1q}^{(F,p_1)}$ formant le couple, considérée dans les coordonnées de flux dans le plan $p_1$

iii) la valeur du flux d'entraînement $\Psi_1$ et

iiii) avec les paramètres $L_2$, $K_{Fx}$, $K_{Fy}$, $K_{Sx}$, et $K_{Sy}$.

3. Procédé selon la revendication 1,
    caractérisé en ce que,

- le courant de commande $i_{S2}^{\star(T,p_2)}$ que l'on a dans le système de coordonnées (T) est déterminé sous forme de vecteur

$$i_{S2}^{\star(T,p_2)} = \begin{pmatrix} i_{S2d}^{\star(T,p_2)} \\ i_{S2q}^{\star(T,p_2)} \end{pmatrix}$$

en mode composant et selon la prescription simplifiée :

$$i_{S2d}^{\star(T,p_2)} = \frac{F_x^{\star}}{K_{Fx}\ \Psi_1} \ , \ i_{S2q}^{\star(T,p_2)} = \frac{F_y^{\star}}{K_{Fy}\ \Psi_1}$$

i) le vecteur de force souhaité

$$\underline{F}^{\star} = \begin{pmatrix} F_x^{\star} \\ F_y^{\star} \end{pmatrix} ,$$

ii) la valeur du flux d'entraînement $\Psi_1$ et

iii) avec les paramètres $K_{Fx}$ et $K_{Fy}$

4. Procédé selon l'une des revendications précédentes,
    caractérisé en ce que,

- à la commande du vecteur de force transversale selon l'invention, on superpose une régulation du vecteur de force transversale, la valeur réelle du vecteur de force transversale étant appréhendée directement au moyen de capteurs d'effort directement par une technique de mesure, ou déterminée par l'intermédiaire d'un dispositif destiné à identifier les paramètres, tels qu'un observateur d'état, à partir d'autres grandeurs de mesure, et comparées ensuite à la valeur de consigne, l'écart de régulation ainsi obtenu étant amené à un régulateur et la sortie du régulateur étant reliée à l'entrée de commande du procédé selon l'invention, en vue de moduler la force transversale.

5. Procédé selon l'une des revendications précédentes,
    caractérisé en ce que,

- à la commande du vecteur de force transversale selon l'invention, on superpose une régulation de la position de rotor, la valeur réelle de la position (dans les directions x et y) étant appréhendée directement au moyen de capteurs de distance directement par une technique de mesure, ou déterminée par l'intermédiaire d'un dispositif destiné à identifier les paramètres tels qu'un observateur d'état, à partir d'autres grandeurs de mesure, et comparées ensuite (dans les directions x et y) à la valeur de consigne, l'écart de régulation (dans les directions x et y) ainsi obtenu étant amené à un régulateur et la sortie du régulateur étant reliée à l'entrée de commande du procédé selon l'invention, en vue de moduler la force transversale.

6. Procédé selon l'une des revendications précédentes,
   caractérisé en ce que,

   - les grandeurs que sont la valeur de flux d'entraînement $\Psi_1$, l'argument de flux d'entraînement $\gamma_s^{(p_1)}$ et le courant d'entraînement $i_{S1q}^{(p_1)}$ formant le couple sont calculées à l'aide d'équations machine, à partir de grandeurs de mesure et/ou de grandeurs observées et/ou de valeurs de consigne correspondantes, ou bien en ce que les grandeurs que sont la valeur du flux d'entraînement $\Psi_1$ et l'argument du flux d'entraînement $\gamma_s^{(p_1)}$ sont déterminées par l'intermédiaire d'une mesure de flux ou d'une mesure de flux partiel.

7. Procédé selon l'une des revendications précédentes,
   caractérisé en ce que,

   - à l'aide de la comunande de vecteur de force transversale selon l'invention, on exerce sur le rotor des efforts par l'intermédiaire desquels on influe statiquement et/ou dynamiquement sur le fléchissement du rotor.

8. Procédé selon l'une des revendications précédentes,
   caractérisé en ce que,

   - à l'aide de la commande de vecteur de force transversale selon l'invention, on exerce sur le rotor des efforts par l'intermédiaire desquels on amortit, on excite ou on influe, de toute manière quelconque, passivement et/ ou activement, sur les vibrations propres du rotor.

9. Dispositif de commande d'une machine à champ tournant, avec un enroulement stator, pour effectuer une génération combinée d'un couple et d'une force transversale F, qui agit transversalement sur le rotor et dont l'intensité et la direction peuvent être réglées à volonté, l'enroulement stator comprenant un enroulement d'entraînement ayant un nombre de paires de pôles $p_1$ et un enroulement de commande ayant un nombre de paires de pôles $p_2$ = $p_1 \pm 1$, l'enroulement de commande étant alimenté avec un courant de commande $i_{S2}$, indépendamment du courant d'entraînement $i_{S1}$ de l'enroulement d'entraînement,
   caractérisé en ce qu'

   un module d'alimentation électrique (11) est prévu pour introduire le courant de commande, et un module d'alimentation (12) est prévu pour assurer l'alimentation de l'enroulement d'entraînement,
   un module de transformation de signal (15) est prévu, dans lequel

   i) du fait des grandeurs de mesure et/ou des grandeurs de commande l'argument, représenté dans le plan $p_1$, du flux d'entraînement $\gamma_s^{(p_1)}$, on détermine la valeur du flux d'entraînement $\Psi_1$ et éventuellement la composante transversale représentée dans le plan $p_1$ du vecteur de courant d'entraînement $i_{S1q}^{(p_1)}$,
   ii) on détermine à partir de cela la valeur de consigne du courant de commande, représenté dans le plan $p_2$ et désigné par $i_{S2}^{*(p_2)}$, et

   le courant de commande $i_{S1q}^{(p_1)}$, déterminé de cette manière, sert de valeur de consigne du module d'alimentation en courant (11) de l'enroulement de commande.

10. Dispositif (9) selon la revendication 9,
    caractérisé en ce que,
    le module d'alimentation (12) du bobinage d'entraînement comprend un dispositif de commande au moyen duquel le couple ou la vitesse de rotation ainsi que le flux d'entraînement de la machine peuvent être réglés de manière quelconque.

11. Dispositif (9) selon la revendication 10,
    caractérisé en ce que,
    le dispositif de commande travaille selon un procédé de commande à ligne caractéristique ou bien selon un procédé de commande ou de régulation orienté champ.

**12.** Dispositif (9) selon l'une des revendications 9 à 11,
caractérisé en ce que

- des moyens supplémentaires destinés à effectuer une régulation vectorielle de la force transversale sont prévus, ces moyens comprenant :

  - des capteurs d'effort ou bien un observateur d'état prévu pour déterminer la valeur réelle de la force transversale, et
  - un régulateur destiné à réguler la force transversale,

**13.** Dispositif (9) selon l'une des revendications 9 à 12,
caractérisé en ce que

- des moyens supplémentaires destinés à effectuer une régulation vectorielle de la force transversale sont prévus, ces moyens comprenant :

  - des capteurs de position ou bien un observateur d'état prévu pour déterminer la position du rotor, et
  - un régulateur destiné à réguler la position du rotor,

**14.** Dispositif (9) selon l'une des revendications 9 à 11,
caractérisé en ce que

- des moyens supplémentaires destinés à effectuer une commande ou une régulation de la flexion du rotor sont prévus, ces moyens comprenant :

  - des capteurs d'effort ou bien un observateur d'état prévu pour déterminer la flexion du rotor, et
  - un régulateur destiné à réguler la flexion du rotor,

**15.** Dispositif selon l'une des revendications 9 à 14,
caractérisé en ce que

- des moyens supplémentaires conçus pour amortir les vibrations propres du rotor sont prévus, ces moyens comprenant :

  - des capteurs ou un observateur d'état destiné à déterminer les vibrations du rotor, et
  - un régulateur destiné à éliminer les vibrations rotor par une régulation.

Fx

$\uparrow 2$

$\underline{\Phi}_2$  $\underline{\Phi}_1$

$\underline{F}$  $\overrightarrow{1}$

Fig. 1a

Fy

P1-EBENE

P2-EBENE

XY-EBENE

$\uparrow 2$

$\underline{F}$  $\underline{\Phi}_2$

$\underline{\Phi}_1$

Fig. 1b

$\overrightarrow{1}$

Fig. 2

Fig. 3

Fig. 4a

Fig. 4b

P₁-EBENE

P₂-EBENE

XY-EBENE

Fig. 5

Fig. 6

Fig. 7

Fig. 8

Fig. 9

Fig. 10

Fig. 11

Fig. 12

Fig. 13

Fig. 14

Fig. 15

Fig. 16

Fig. 17

Fig. 18

Fig. 19

Fig. 20

Fig. 21

Fig. 22

Fig. 23

MOTOR & RADIAL-MAGNETLAGER    AXIAL-MAGNETLAGER    MOTOR & RADIAL-MAGNETLAGER

**Fig. 24**

MOTOR & RADIAL-MAGNETLAGER    MOTOR & RADIAL-MAGNETLAGER

**Fig. 25**

MOTOR & RADIAL-
MAGNETLAGER

LAGER            LAGER

Fig. 26

LAGER                    LAGER                    STÖRKRAFT

Fig. 27a

QUERKRAFT IN DER
DREHFELDMASCHINE

STÖRKRAFT

LAGER                    LAGER

Fig. 27b